(19) Europäisches Patentamt / European Patent Office / Office européen des brevets

(11) **EP 4 641 475 A1**

(12) **EUROPEAN PATENT APPLICATION**
published in accordance with Art. 153(4) EPC

(43) Date of publication:
**29.10.2025 Bulletin 2025/44**

(21) Application number: **23906727.5**

(22) Date of filing: **06.12.2023**

(51) International Patent Classification (IPC):
**G06Q 50/06** (2024.01)   **E03F 3/02** (2006.01)
**G06Q 10/20** (2023.01)

(52) Cooperative Patent Classification (CPC):
**E03F 3/02; G06Q 10/20; G06Q 50/06**

(86) International application number:
**PCT/JP2023/043624**

(87) International publication number:
**WO 2024/135361 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.12.2022 JP 2022201995**

(71) Applicant: **Kubota Corporation**
**Osaka 556-8601 (JP)**

(72) Inventors:
• **KOBAYASHI, Yuichi**
**Amagasaki-shi, Hyogo 660-0095 (JP)**
• **OKUMURA, Yuta**
**Amagasaki-shi, Hyogo 660-0095 (JP)**
• **TAKAHASHI, Shimpei**
**Sakai-shi, Osaka 590-0908 (JP)**

(74) Representative: **Müller-Boré & Partner**
**Patentanwälte PartG mbB**
**Friedenheimer Brücke 21**
**80639 München (DE)**

(54) **BURIED ENVIRONMENT CLASSIFICATION MAP CREATING DEVICE, BURIED PIPE DETERIORATION DEGREE PREDICTING DEVICE, BURIED ENVIRONMENT CLASSIFICATION MAP CREATING METHOD, BURIED PIPE DETERIORATION DEGREE PREDICTING METHOD, AND PROGRAM**

(57)   A buried pipe deterioration degree prediction apparatus (1) includes a buried pipe deterioration degree calculation unit (132). The buried pipe deterioration degree calculation unit (132) calculates a deterioration degree for each of the buried pipes based on a buried pipe deterioration degree prediction model and a burial environment of each of the buried pipes identified by an optimized burial environment classification map (58a). The optimized burial environment classification map (58a) is created by optimizing the burial environment classification of a part of grounds in a general burial environment classification map (56a) by machine learning. The part of grounds is selected based on water leakage accident data (53) which is a past record of water leakage accidents for each of the buried pipes.

FIG.2

EP 4 641 475 A1

**Description**

TECHNICAL FIELD

The present disclosure relates to a burial environment classification map creation apparatus, a buried pipe deterioration degree prediction apparatus, a burial environment classification map creation method, a buried pipe deterioration degree prediction method, and a program.

BACKGROUND ART

A pipe, such as a water pipe, is buried in the soil. During long-term use of the pipe, the pipe may be subject to corrosion. Japanese Patent Laying-Open No. 2007-107882 (PTL 1) discloses a method of predicting a degree of corrosion of a buried pipe.

CITATION LIST

PATENT LITERATURE

PTL 1: Japanese Patent Laying-Open No. 2007-107882

SUMMARY OF INVENTION

TECHNICAL PROBLEM

An object of the present disclosure is to provide a burial environment classification map creation apparatus, a buried pipe deterioration degree prediction apparatus, a burial environment classification map creation method, a buried pipe deterioration degree prediction method, and a program, which makes it possible to predict a deterioration degree for a buried pipe more accurately.

SOLUTION TO PROBLEM

The burial environment classification map creation apparatus according to an embodiment of the present disclosure includes a first map creation unit and a second map creation unit. The first map creation unit creates, based on a pipeline map which is a map of buried pipes and a generally available geological map, a general burial environment classification map for a region corresponding to the pipeline map. The second map creation unit includes a ground selection unit and an optimized burial environment classification map creation unit. The ground selection unit selects a part of grounds from the general burial environment classification map based on leakage accident data which is a past record of water leakage accidents for each of the buried pipes. The optimized burial environment classification map creation unit creates an optimized burial environment classification map for the region by optimizing a burial environment classification of the part of grounds by machine learning.

The buried pipe deterioration degree prediction apparatus according to an embodiment of the present disclosure includes a buried pipe deterioration degree calculation unit. The buried pipe deterioration degree calculation unit calculates a deterioration degree for each of the buried pipes based on a burial environment of each of the buried pipes identified by an optimized burial environment classification map optimized for a region corresponding to a pipeline map which is a map of buried pipes, first information related to a burial period of each of the buried pipes, second information related to a pipe wall thickness of each of the buried pipes, and a buried pipe deterioration degree prediction model. The optimized burial environment classification map is created by optimizing a burial environment classification of a part of grounds in a general burial environment classification map for the region by machine learning. The general burial environment classification map is created based on the pipeline map and a generally available geological map. The part of grounds is selected from the general burial environment classification map based on water leakage accident data which is a past record of water leakage accidents for each of the buried pipes.

The burial environment classification map creation method according to an embodiment of the present disclosure includes: a step of creating, based on a pipeline map which is a map of buried pipes and a generally available geological map, a general burial environment classification map for a region corresponding to the pipeline map; a step of selecting a part of grounds from the general burial environment classification map based on water leakage accident data which is a past record of water leakage accidents for each of the buried pipes; and a step of creating an optimized burial environment classification map for the region by optimizing a burial environment classification of the part of grounds by machine learning.

The buried pipe deterioration degree prediction method according to an embodiment of the present disclosure includes a step of calculating a deterioration degree for each of the buried pipes based on a burial environment of each of the buried pipes identified by an optimized burial environment classification map optimized for a region corresponding to a pipeline map which is a map of buried pipes, first information related to a burial period of each of the buried pipes, second information related to a pipe wall thickness of each of the buried pipes, and a buried pipe deterioration degree prediction model. The optimized burial environment classification map is created by optimizing a burial environment classification of a part of grounds in a general burial environment classification map for the region by machine learning. The general burial environment classification map is created based on the pipeline map and a generally available geological map. The part of grounds is selected from the general burial environment classification map based on water leakage accident data which is a past record of water leakage accidents for each of the buried pipes.

The program according to an embodiment of the present disclosure causes a processor to execute each step of the burial environment classification map creation method of the present disclosure.

The program according to an embodiment of the present disclosure causes a processor to execute each step of the buried pipe deterioration degree prediction method of the present disclosure.

ADVANTAGEOUS EFFECTS OF INVENTION

According to the burial environment classification map creation apparatus, the buried pipe deterioration degree prediction apparatus, the burial environment classification map creation method, the buried pipe deterioration degree prediction method, and the program of the present disclosure, it is possible to predict a deterioration degree for a buried pipe more accurately.

BRIEF DESCRIPTION OF DRAWINGS

Fig. 1 is a schematic diagram illustrating a hardware configuration of a buried pipe deterioration degree prediction apparatus according to an embodiment.
Fig. 2 is a block diagram illustrating a functional configuration of the buried pipe deterioration degree prediction apparatus according to the embodiment.
Fig. 3 is a block diagram illustrating a functional configuration of a correspondence table creation unit of the buried pipe deterioration degree prediction apparatus according to the embodiment.
Fig. 4 is a block diagram illustrating a functional configuration of a second map creation unit of the buried pipe deterioration degree prediction apparatus according to the embodiment.
Fig. 5 is a block diagram illustrating a functional configuration of a fitness calculation unit of the buried pipe deterioration degree prediction apparatus according to the embodiment.
Fig. 6 is a block diagram illustrating a functional configuration of a storage unit of the buried pipe deterioration degree prediction apparatus according to the embodiment.
Fig. 7 is a diagram illustrating an example data structure of survey pipe data.
Fig. 8 is a schematic diagram illustrating a geological map.
Fig. 9 is a diagram illustrating an example data structure of a correspondence table between geological information, ground IDs, corrosion rates and burial environments.
Fig. 10 is a box plot illustrating a relationship between a burial environment and a corrosion rate.
Fig. 11 is a diagram illustrating a pipeline map.

Fig. 12 is a diagram illustrating an example data structure of buried pipe attribute data.
Fig. 13 is a diagram illustrating an example data structure of water leakage accident data.
Fig. 14 is a diagram illustrating a general integrated map.
Fig. 15 is a diagram illustrating an optimized integrated map.
Fig. 16 is a diagram illustrating an example data structure of nominal pipe wall thickness data.
Fig. 17 is a diagram illustrating an example of calculating an estimated probability of water leakage accidents by using a probability-of-water-leakage-accidents prediction model.
Fig. 18 is a diagram illustrating an example of a buried pipe deterioration degree prediction result (a buried pipe deterioration degree prediction table).
Fig. 19 is a diagram illustrating an example of a buried pipe deterioration degree prediction result (a buried pipe deterioration degree prediction map).
Fig. 20 is a flowchart illustrating a correspondence table creation method according to the embodiment.
Fig. 21 is a flowchart illustrating a method of creating an optimized integrated map according to the embodiment.
Fig. 22 is a flowchart illustrating a step of creating an optimized integrated map according to the embodiment.
Fig. 23 is a flowchart illustrating a step of selecting a ground ID as a candidate for optimizing the burial environment classification.
Fig. 24 is a flowchart illustrating a step of excluding a ground ID whose burial environment classification does not need to change.
Fig. 25 is a flowchart illustrating a step of calculating the estimated number of water leakage accidents.
Fig. 26 is a diagram illustrating an example data structure of first preprocessed buried pipe data.
Fig. 27 is a flowchart illustrating a step of creating first preprocessed buried pipe data.
Fig. 28 is a flowchart illustrating a step of optimizing a burial environment classification of a ground ID selected as a candidate for optimizing the burial environment classification by machine learning.
Fig. 29 is a diagram illustrating example genes of each of a plurality of burial environment map candidates.
Fig. 30 is a flowchart illustrating a step of generating a population of new generations.
Fig. 31 is a flowchart illustrating a step of calculating fitness of each individual in a population of current generations.
Fig. 32 is a diagram illustrating an example data structure of second preprocessed buried pipe data.
Fig. 33 is a flowchart illustrating a step of creating second preprocessed buried pipe data.
Fig. 34 is a diagram illustrating an example data structure of an estimated probability-of-water-leakage-accidents result of an individual.

Fig. 35 is a diagram illustrating an example fitness of an individual.

Fig. 36 is a flowchart illustrating a method of predicting a deterioration degree for a buried pipe according to the embodiment.

Fig. 37 is a flowchart illustrating a step of calculating an estimated probability of water leakage accidents.

Fig. 38 is a diagram illustrating an example data structure of third preprocessed buried pipe data.

Fig. 39 is a flowchart illustrating a step of creating third preprocessed buried pipe data.

Fig. 40 is a diagram illustrating an example of calculating a deterioration degree for a buried pipe based on a buried pipe deterioration degree prediction model.

Fig. 41 is a diagram illustrating a schematic configuration of a buried pipe deterioration degree prediction system according to a modification.

DESCRIPTION OF EMBODIMENTS

Hereinafter, an embodiment of the present disclosure will be described. The same components will be denoted by the same reference numerals, and the description thereof will not be repeated.

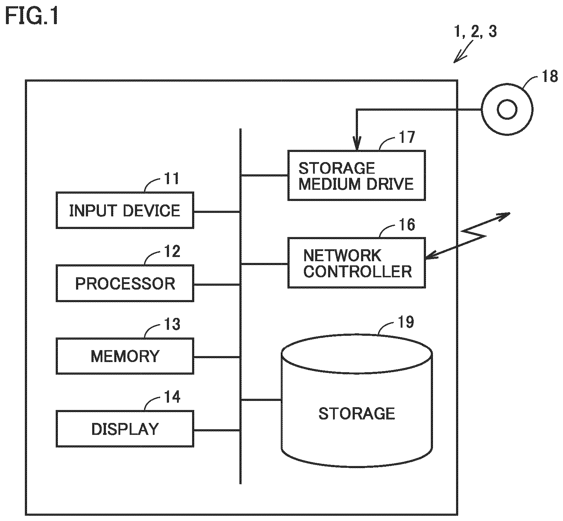

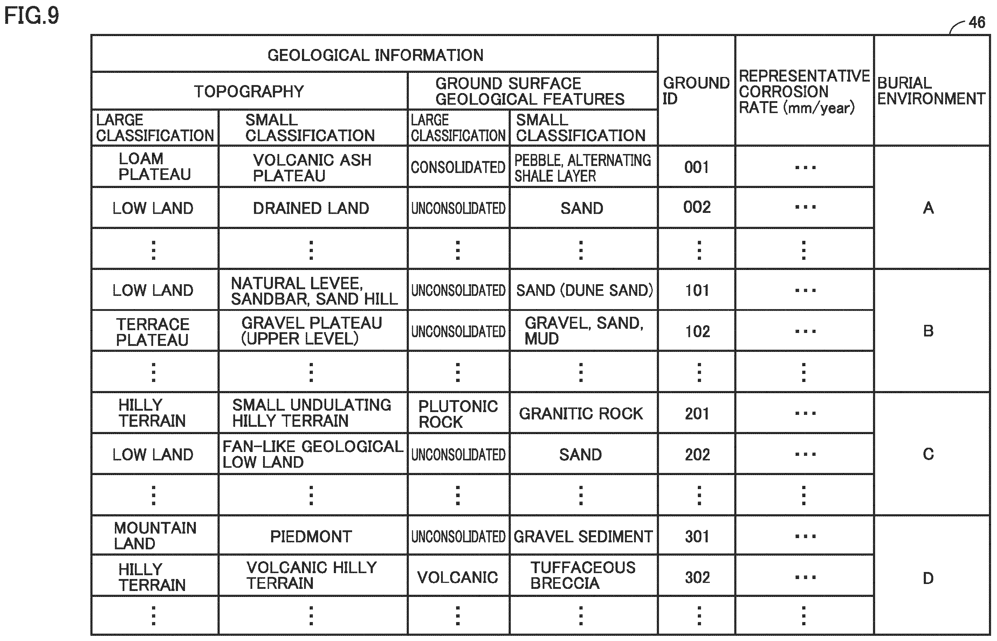

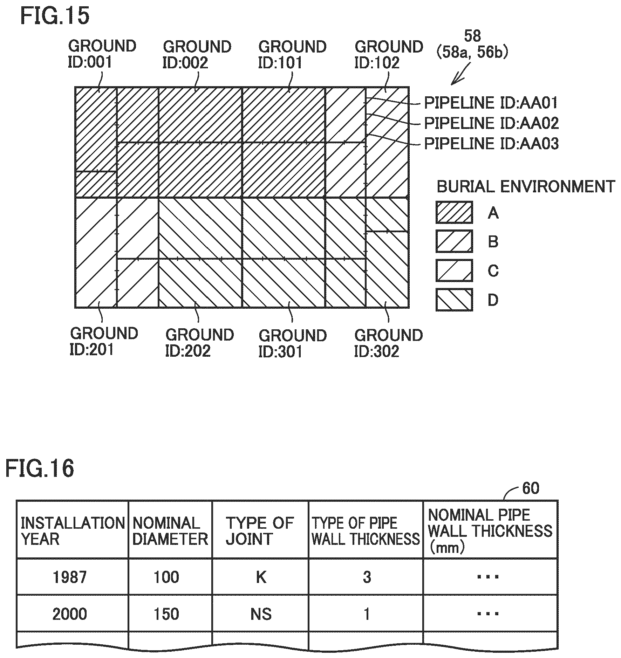

A buried pipe deterioration degree prediction apparatus 1 will be described with reference to Figs. 1 to 6. The buried pipe deterioration degree prediction apparatus 1 is an apparatus that predicts a deterioration degree for a buried pipe. In the present embodiment, the buried pipe deterioration degree prediction apparatus 1 also functions as a burial environment classification map creation apparatus 2 and a correspondence table creation apparatus 3. The burial environment classification map creation apparatus 2 is an apparatus that creates an optimized burial environment classification map 58a (see Fig. 15). The correspondence table creation apparatus 3 is an apparatus that creates a correspondence table 46 between geological information, ground IDs, corrosion rates and burial environments (hereinafter simply referred to as "correspondence table 46" (see Fig. 9)).

<Hardware Configuration>

With reference to Fig. 1, a hardware configuration of the buried pipe deterioration degree prediction apparatus 1 will be described. The buried pipe deterioration degree prediction apparatus 1 includes an input device 11, a processor 12, a memory 13, a display 14, a network controller 16, a storage medium drive 17, and a storage 19.

The input device 11 receives various types of input operations. The input device 11 is, for example, a keyboard, a mouse, or a touch panel.

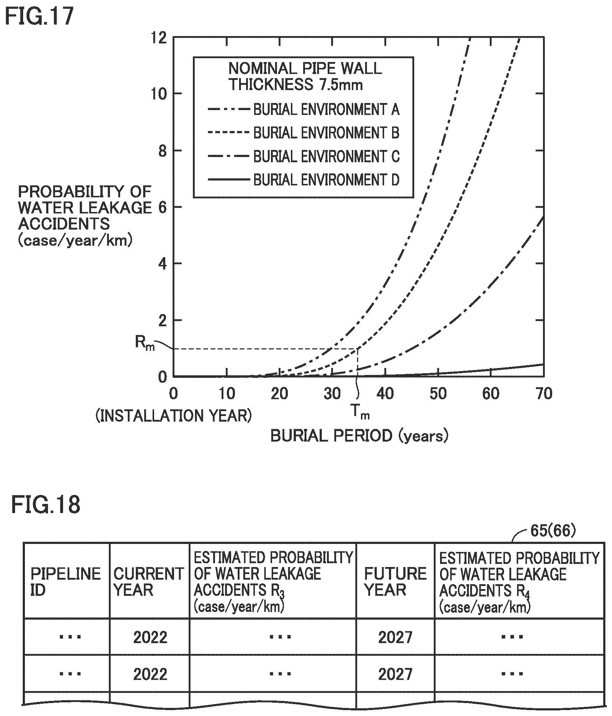

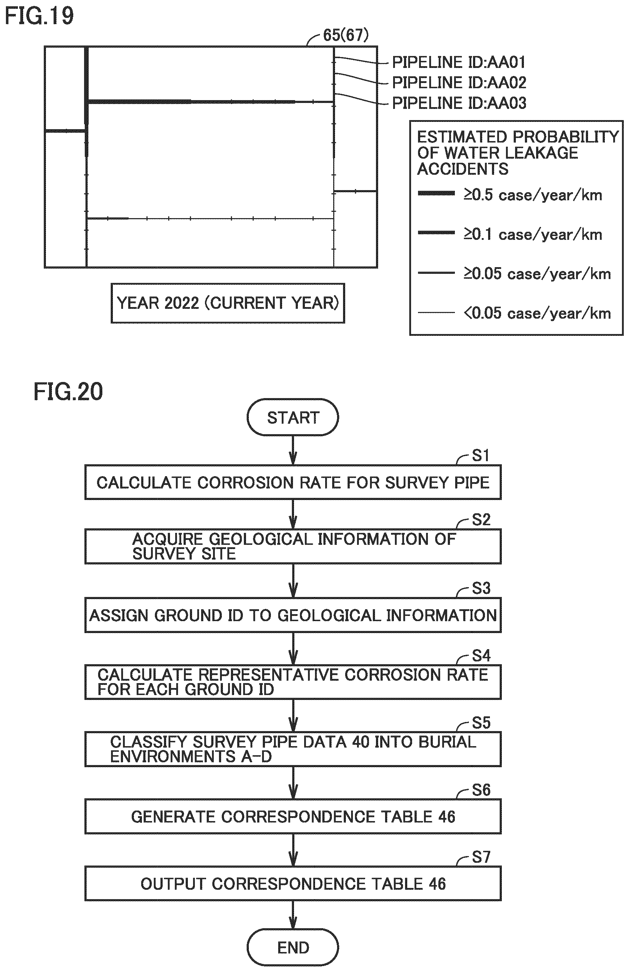

The display 14 displays information or the like required to be processed by the buried pipe deterioration degree prediction apparatus 1. The display 14 displays, for example, an optimized integrated map 58 (see Fig. 15) and a buried pipe deterioration degree prediction result 65 (see Figs. 18 and 19). The display 14 is, for example, an LCD (Liquid Crystal Display) or an organic EL (Electroluminescence) display.

The processor 12 executes a process required to implement the functions of the buried pipe deterioration degree prediction apparatus 1 by executing a program (which will be described later). The processor 12 includes, for example, a CPU, a GPU, or the like.

The memory 13 provides a storage area for temporarily storing program codes or a work memory when the processor 12 executes a program. The memory 13 is, for example, a volatile memory device such as DRAM (Dynamic Random Access Memory) or SRAM (Static Random Access Memory).

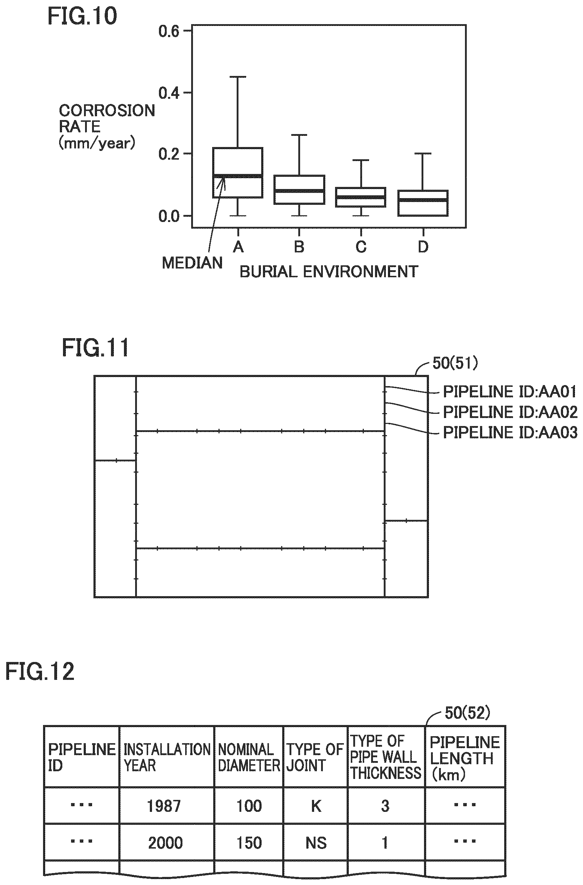

The network controller 16 transmits and receives a program or data to and from an external device (not shown) via a communication network (not shown) such as the Internet or an intranet. For example, the network controller 16 transmits the optimized integrated map 58 (see Fig. 15) and the buried pipe deterioration degree prediction result 65 (see Figs. 18 and 19) to an external device via a communication network. The network controller 16 may receive buried pipe data 50 (see Figs. 11 and 12) from a client (for example, a water supply corporation) via a communication network. The network controller 16 supports any communication system such as Ethernet (registered trademark), wireless LAN, or Bluetooth (registered trademark).

The storage medium drive 17 is a device that reads out a program or data stored in a storage medium 18. The storage medium drive 17 may also be a device that writes a program or data to the storage medium 18. The storage medium 18 is a non-transitory storage medium, and stores a program or data in a non-volatile manner. The storage medium 18 is, for example, an optical storage medium such as an optical disk (for example, a CD-ROM or a DVD-ROM), a semiconductor storage medium such as a flash memory or a USB memory, a magnetic storage medium such as a floppy disk (FD) or a storage tape, or a magneto-optical storage medium such as a magneto-optical (MO) disk.

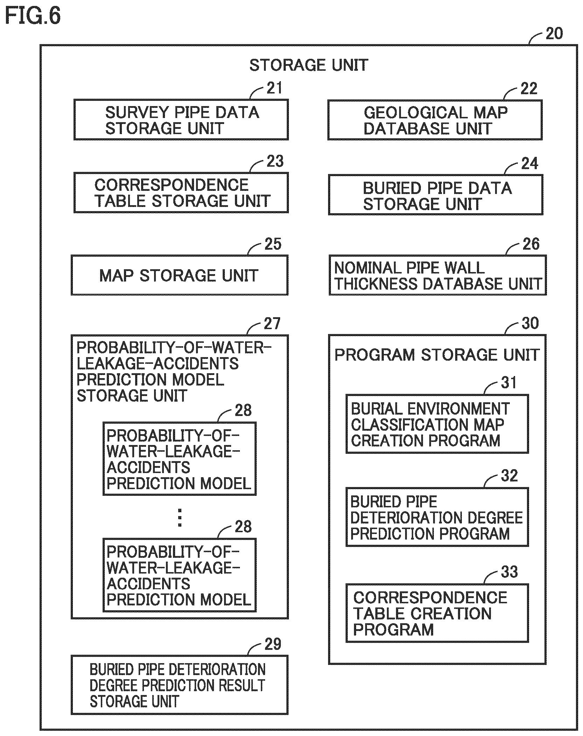

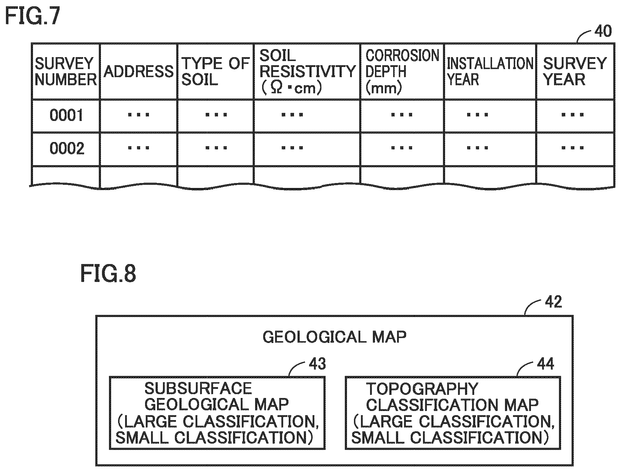

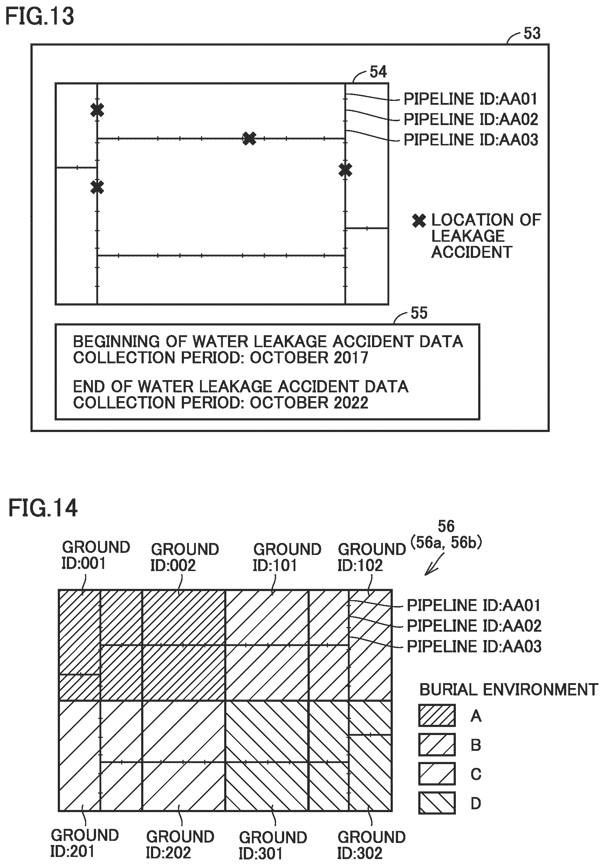

The storage 19 is, for example, a nonvolatile memory device such as a hard disk or a solid state drive (SSD). The storage 19 stores survey pipe data 40 (see Fig. 7), a geological map 42 (see Fig. 8), a correspondence table 46 (see Fig. 9), buried pipe data 50 (see Fig. 11 and Fig. 12), a general integrated map 56 (see Fig. 14), an optimized integrated map 58 (see Fig. 15), nominal pipe wall thickness data 60 (see Fig. 16), a probability-of-water-leakage-accidents prediction model 28 (see Fig. 6, Fig. 17 and Fig. 40), a buried pipe deterioration degree prediction result 65, programs to be executed in the processor 12, and the like. The programs include a burial environment classification map creation program 31 (see Fig. 6), a buried pipe deterioration degree prediction program 32 (see Fig. 6), and a correspondence table creation program 33 (see Fig. 6).

The programs for implementing the functions of the buried pipe deterioration degree prediction apparatus 1, such as the burial environment classification map creation program 31 (see Fig. 6), the buried pipe deterioration degree prediction program 32 (see Fig. 6), and the correspondence table creation program 33 (see Fig. 6), may be stored in the non-transitory storage medium 18 for distribution, and may be installed in the storage 19. The programs for implementing the functions of the buried pipe deterioration degree prediction apparatus 1, such as the burial environment classification map creation program 31, the buried pipe deterioration degree prediction program 32, and the correspondence table creation program 33, may be downloaded to the buried pipe deterioration degree prediction apparatus 1 via the Internet or an intranet.

In the present embodiment, it is described that a general-purpose computer (processor 12) implements the functions of the buried pipe deterioration degree prediction apparatus 1 by executing a program. All or a part of the functions of the buried pipe deterioration degree prediction apparatus 1 may be implemented by using an integrated circuit such as an application specific integrated circuit (ASIC) or a field programmable gate array (FPGA).

<Functional Configuration>

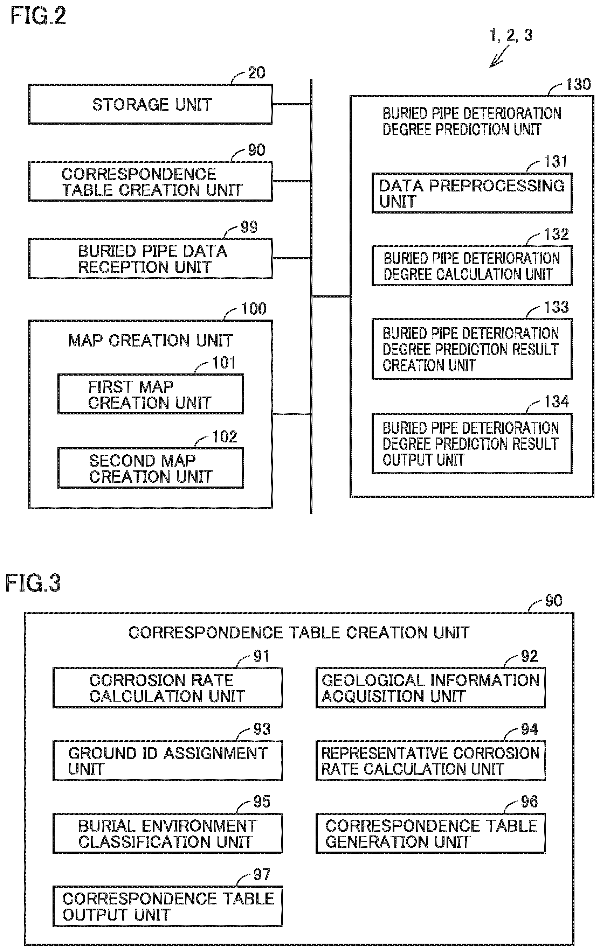

An example functional configuration of the buried pipe deterioration degree prediction apparatus 1 will be described with reference to Figs. 2 to 19. With reference to Fig. 2, the buried pipe deterioration degree prediction apparatus 1 includes a storage unit 20, a correspondence table creation unit 90, a buried pipe data reception unit 99, a map creation unit 100, and a buried pipe deterioration degree prediction unit 130.

<Storage Unit 20>

The storage unit 20 is implemented by the storage 19 (see Fig. 1) or the storage medium 18 (see Fig. 1). With reference to Fig. 6, the storage unit 20 includes a survey pipe data storage unit 21, a geological map database unit 22, a correspondence table storage unit 23, a buried pipe data storage unit 24, a map storage unit 25, a nominal pipe wall thickness database unit 26, a probability-of-water-leakage-accidents prediction model storage unit 27, a buried pipe deterioration degree prediction result storage unit 29, and a program storage unit 30.

With reference to Figs. 6 and 7, the survey pipe data 40 is stored in the survey pipe data storage unit 21. A survey pipe is, for example, a water pipe. The survey pipe is buried in soil. The survey pipe data 40 is, for example, survey data of pipes obtained by digging and surveying pipes at a large number of survey sites (for example, about 6000 survey sites) throughout Japan. The survey pipe data 40 includes a survey number, a survey site's address, a type of soil, a soil resistivity, a corrosion depth of a survey pipe, an installation year, and a survey year. The survey site's address refers to the address of a survey site where the survey pipe is buried. The type of soil is the type of soil where the survey pipe is buried. The soil resistivity refers to the resistivity of the soil where the survey pipe is buried. The survey year is the year when the corrosion depth of the survey pipe was surveyed. The survey pipe data 40 is provided, for example, through the storage medium 18 (see Fig. 1) or a communication network such as the Internet or an intranet.

With reference to Figs. 6 and 8, the geological map 42 is stored in the geological map database unit 22. The geological map 42 includes, for example, a subsurface geological map 43 and a topography classification map 44. The subsurface geological map 43 is a map illustrating the geography of the ground surface. The subsurface geological map 43 includes, for example, a large classification and a small classification. The topography classification map 44 is a map illustrating the topography. The topography classification map 44 includes, for example, a large classification and a small classification. The surface geographic map 43 and the topography classification map 44 are provided by a public organization such as the Ministry of Land, Infrastructure, Transport and Tourism of Japan, and are generally available.

With reference to Figs. 6 and 9, the correspondence table 46 is stored in the correspondence table storage unit 23. The correspondence table 46 is created based on the survey pipe data 40 and the geological map 42. In the correspondence table 46, the geological information, the ground ID, the representative corrosion rate, and the burial environment are associated with each other.

The geological information is, for example, a combination of the ground surface geological features and the topography of the survey site (see Fig. 7). The ground ID is assigned according to the geological information. The representative corrosion rate for each ground ID is, for example, an average corrosion rate for each ground ID or a median corrosion rate for each ground ID. The average corrosion rate for each ground ID is an average value of the corrosion rates of the survey pipes to which the same ground ID is assigned. The median corrosion rate for each ground ID is a 50th percentile value of the corrosion rates of the survey pipes to which the same ground ID is assigned.

In the correspondence table 46, the survey pipe data 40 is classified into four burial environments A to D based on the type of soil (see Fig. 7) and the soil resistivity (see Fig. 7). The burial environment A represents a soil having a soil resistivity of less than 1500 $\Omega \cdot cm$ or a soil having a corrosivity to a buried pipe which is equivalent to that of the aforementioned soil. The burial environment B represents a clay soil having a soil resistivity of 1500 $\Omega \cdot cm$ or more or a soil having a corrosivity to a buried pipe which is equivalent to that of the clay soil. The burial environment C represents a silty soil having a soil resistivity of 1500 $\Omega \cdot$ cm or more or a soil having a corrosivity to a buried pipe which is equivalent to that of the silty soil. The burial environment D represents a sandy soil having a soil resistivity of 1500 $\Omega \cdot$ cm or more or a soil having a corrosivity to a buried pipe which is equivalent to that of the sandy soil. Among the burial environments A to D, the burial environment A has the highest corrosivity to the buried pipe.

The soil in which a buried pipe is buried is classified into four burial environments A to D due to the following two reasons. The first reason is that the inventors of the present disclosure have found that there is a statistically significant correlation between the burial environments A to D and the corrosion rate of a buried pipe as illustrated in Fig. 10 based on an analysis on the survey pipe data 40. The second reason is that the number of survey data concerning the four burial environments A to D accounts for the majority (80% or more) of the total number of the survey data.

As illustrated in Fig. 10, the median corrosion rate of the soil classified into the burial environment A is the largest among the median corrosion rates of all the burial environments A to D. The burial environment A has the highest corrosivity to a buried pipe among all the burial environments A to D. The median corrosion rate of the soil classified into the burial environment B is the second largest among the median corrosion rates of all the burial environments A to D. The median corrosion rate of the soil classified into the burial environment B is the third smallest among the median values of all the burial environments A to D. The burial environment B has a lower corrosivity to the buried pipe than the burial environment A, and has a higher corrosivity to the buried pipe than the burial environment C and the burial environment D. The median corrosion rate of the soil classified into the burial environment C is the second smallest among the median corrosion rates of all the burial environments A to D. The burial environment C has a lower corrosivity to the buried pipe than the burial environment A and the burial environment B, but has higher corrosivity to the buried pipe than the burial environment D. The median corrosion rate of the soil classified into the burial environment D is the smallest among the median corrosion rates of all the burial environments A to D. The burial environment D has the lowest corrosivity to the buried pipe among all the burial environments A to D.

With reference to Figs. 6 and 11 to 13, buried pipe data 50 (see Figs. 11 and 12) and water leakage accident data 53 (see Fig. 13) are stored in the buried pipe data storage unit 24. The use of the buried pipe is the same as the use of the survey pipe, and the buried pipe is, for example, a water pipe. The buried pipe is buried in soil.

The buried pipe data 50 includes, for example, a pipeline map 51 (see Fig. 11) and buried pipe attribute data 52 (see Fig. 12).

With reference to Fig. 11, the pipeline map 51 is a map of buried pipes managed by a client, and includes a pipeline ID of each buried pipe and an address (burial site) of each buried pipe. In the pipeline map 51, the pipeline ID of each buried pipe and the address of each buried pipe are associated with each other, and the address of each buried pipe is displayed on the map for the pipeline ID of each buried pipe.

With reference to Fig. 12, the buried pipe attribute data 52 includes first information related to a burial period of each buried pipe and second information related to a pipe wall thickness of each buried pipe. The buried pipe attribute data 52 includes, for example, a pipeline ID and a pipeline length of each buried pipe, an installation year of each buried pipe as the first information, and a nominal diameter, a type of joint and a type of pipe wall thickness of each buried pipe as the second information. In the buried pipe attribute data 52, the pipeline ID, the installation year, the nominal diameter, the type of joint, the type of pipe wall thickness, and the pipeline length are associated with each other. The installation year of each buried pipe is the year in which each buried pipe is installed (buried). The type of joint includes type A, type K, type T, and type NS. The type of pipe wall thickness includes type 1, type 2, type 3, or the like. The pipeline length is the length of buried pipes.

With reference to Fig. 13, the water leakage accident data 53 is a past record of water leakage accidents for each of the buried pipes. The water leakage accident data 53 includes, for example, a water leakage accident map 54 and a beginning and an end of a water leakage accident data collection period 55. The water leakage accident map 54 is a map illustrating locations recorded with water leakage accidents in the pipeline map 51 during the water leakage accident data collection period 55.

The map storage unit 25 stores a general integrated map 56 (see Fig. 14) for the region corresponding to the pipeline map 51 and an optimized integrated map 58 (see Fig. 15) for the region corresponding to the pipeline map 51.

With reference to Fig. 14, the general integrated map 56 is an integrated map of the pipeline map 51, a general burial environment classification map 56a for a region corresponding to the pipeline map 51, and a ground ID map 56b for the region corresponding to the pipeline map 51. The general burial environment classification map 56a is a map indicating a burial environment for the region corresponding to the pipeline map 51. The ground ID map 56b is a map indicating a ground ID for the region corresponding to the pipeline map 51.

With reference to Fig. 15, the optimized integrated map 58 is an integrated map of the pipeline map 51, an optimized burial environment classification map 58a for a region corresponding to the pipeline map 51, and a ground ID map 56b for a region corresponding to the pipeline map 51. The optimized burial environment classification map 58a is created by optimizing a burial environment classification of the general burial environment classification map 56a based on the water leakage accident data 53.

With reference to Figs. 6 and 16, the nominal pipe wall thickness data 60 is stored in the nominal pipe wall thickness database 26. The nominal pipe wall thickness data 60 includes, for example, an installation year, a nominal diameter, a type of joint, a type of pipe wall thickness, and a nominal pipe wall thickness of each buried pipe. In the nominal pipe wall thickness data 60, the installation year, the nominal diameter, the type of joint, the type of pipe wall thickness, and the nominal pipe wall thickness of each buried pipe are associated with each other. The nominal pipe wall thickness refers to the standard pipe wall thickness.

With reference to Fig. 6, the probability-of-water-leakage-accidents prediction model storage unit 27 stores a plurality of probability-of-water-leakage-accidents prediction models 28 which are different from each other according to the burial environment and the nominal pipe wall thickness. The plurality of probability-of-water-leakage-accidents prediction models 28 includes, for example, a probability-of-water-leakage-accidents prediction model for the burial environment A, a probability-of-water-leakage-accidents prediction model for the burial environment B, a probability-of-water-leakage-accidents prediction model for the burial environment C, and a probability-of-water-leakage-accidents prediction model for the burial environment D. Each of the probability-of-water-leakage-accidents prediction model for the burial environment A, the probability-of-water-leakage-accidents prediction model for the burial environment B, the probability-of-water-leakage-accidents prediction model for the burial environment C, and the probability-of-water-leakage-accidents prediction model for the burial environment D includes a plurality of probability-of-water-leakage-accidents prediction models, each for a nominal pipe wall thickness. Fig. 17 illustrates a plurality of probability-of-water-leakage-accidents prediction models 28 as an example. The plurality of probability-of-water-leakage-accidents prediction models 28 are not particularly limited, and may be, for example, a probability-of-water-leakage-accidents prediction model disclosed in Japanese Patent Laying-Open No. 2021-56224, or m may be a probability-of-water-leakage-accidents estimation formula for a buried pipe provided by the Water Research Center of Japan.

The probability-of-water-leakage-accidents estimation formula for a buried pipe provided by the Water Research Center of Japan is given by the following equation (1). Where y represents a probability of water leakage accidents (case/km/year) of a buried pipe, $C_1$ represents a correction coefficient for the pipe specification, $C_2$ represents a correction coefficient for the pipe diameter, $C_3$ represents a correction coefficient for the conditions of ground where the buried pipe is buried, and f(T) represents the standard accident rate curve for each pipe type. Here, f(T) is given by the following equation (2). Where T represents a buried period of a buried pipe, and coefficients a and b represent the degree of increase in the probability of water leakage accidents for each pipe type over time.

$$Y = C_1 \cdot C_2 \cdot C_3 \cdot f(T) \qquad (1)$$

$$f(T) = a \cdot T^b \qquad (2)$$

With reference to Fig. 6, the buried pipe deterioration degree prediction result 65 is stored in buried pipe deterioration degree prediction result storage unit 29. The buried pipe deterioration degree prediction result 65 may be the buried pipe deterioration degree prediction table 66 (see Fig. 18), the buried pipe deterioration degree prediction map 67 (see Fig. 19), or both.

The program storage unit 30 stores programs for implementing the functions of the buried pipe deterioration degree prediction apparatus 1. The programs for implementing the functions of the buried pipe deterioration degree prediction apparatus 1 include, for example, a burial environment classification map creation program 31, a buried pipe deterioration degree prediction program 32, and a correspondence table creation program 33.

<Correspondence Table Creation Unit 90>

With reference to Figs. 2 and 3, the correspondence table creation unit 90 creates a correspondence table 46 (see Fig. 9) based on the survey pipe data 40 (see Fig. 7) and the generally available geological map 42 (see Fig. 8). The correspondence table creation unit 90 includes a corrosion rate calculation unit 91, a geological information acquisition unit 92, a ground ID assignment unit 93, a representative corrosion rate calculation unit 94, a burial environment classification unit 95, a correspondence table generation unit 96, and a correspondence table output unit 97.

The corrosion rate calculation unit 91 calculates a corrosion rate of each survey pipe with a survey number (see Fig. 7). For example, the corrosion rate calculation unit 91 calculates a difference between the survey year (see Fig. 7) and the installation year of each survey pipe (see Fig. 7) as the burial period of each survey pipe. The corrosion rate calculation unit 91 calculates the corrosion rate of each survey pipe by dividing the corrosion depth of each survey pipe (see Fig. 7) by the burial period of the same survey pipe.

The geological information acquisition unit 92 acquires geological information for the survey site (see Fig. 7) with reference to the survey pipe data 40 (see Fig. 7) and the geological map database unit 22. The ground ID assignment unit 93 assigns a ground ID to the corresponding geological information (such as a combination of the ground surface geological features and the topography).

The representative corrosion rate calculation unit 94 calculates a representative corrosion rate for each ground ID. The representative corrosion rate for each ground ID is, for example, an average corrosion rate for each ground ID or a median corrosion rate for each ground ID. When the representative corrosion rate for each ground ID is the average corrosion rate for each ground ID, the representative corrosion rate calculation unit 94 calculates an average value of the corrosion rates for the survey pipes to which the same ground ID is assigned. When the representative corrosion rate for each ground ID is the median corrosion rate for each ground ID, the representative corrosion rate calculation unit 94 calculates a 50th percentile value of the corrosion rates of the survey pipes to which the same ground ID is assigned.

The burial environment classification unit 95 classifies the survey pipe data 40 into four burial environments A to D based on the type of soil (see Fig. 7) and the soil resistivity (see Fig. 7). The correspondence table generation unit 96 creates a correspondence table 46 (see Fig. 9) by associating the geological information, the ground ID, the representative corrosion rate, and the burial environment with each other. The correspondence table output unit 97 outputs the correspondence table 46 to the correspondence table storage unit 23 (see Fig. 6).

<Buried Pipe Data Reception Unit 99>

With reference to Fig. 2, the buried pipe data reception unit 99 receives the buried pipe data 50 (see Figs. 11 and 12) and the water leakage accident data 53 (see Fig. 13) from a client. The buried pipe data 50 and the water leakage accident data 53 are provided from the client, for example, through the storage medium 18 (see Fig. 1) or a communication network such as the Internet or an intranet. The buried pipe data reception unit 99 outputs the buried pipe data 50 and the water leakage accident data 53 to the buried pipe data storage unit 24 (see Fig. 6). The buried pipe data 50 and the water leakage accident data 53 may be stored in the storage 19 (see Fig. 1) in advance.

<Map Creation Unit 100>

With reference to Fig. 2, the map creation unit 100 includes a first map creation unit 101 and a second map creation unit 102.

<First Map Creation Unit 101>

With reference to Fig. 2, the first map creation unit 101 creates the general integrated map 56 (see Fig. 14) based on the pipeline map 51 (see Fig. 11), the geological map 42 (see Fig. 8), and the correspondence table 46 (see Fig. 9).

Specifically, the first map creation unit 101 reads the pipeline map 51 (see Fig. 11) from the buried pipe data storage unit 24 (see Fig. 6). The first map creation unit 101 reads the geological map 42 (for example, the subsurface geological map 43 and the topography classification map 44) for the region corresponding to the pipeline map 51 from the geological map database unit 22 (see Figs. 6 and 8). The first map creation unit 101 reads the correspondence table 46 (see Fig. 9) from the correspondence table storage unit 23. The first map creation unit 101 creates the general integrated map 56 (see Fig. 14) by superimposing the burial environment and the ground ID for the region corresponding to the pipeline map 51 on the pipeline map 51.

The general integrated map 56 is a map in which the pipeline map 51, the general burial environment classification map 56a for the region corresponding to the pipeline map 51, and the ground ID map 56b for the region corresponding to the pipeline map 51 are combined. The general burial environment classification map 56a is a map indicating a burial environment for a region corresponding to the pipeline map 51. The ground ID map 56b is a map indicating a ground ID for the region corresponding to the pipeline map 51. The first map creation unit 101 outputs the general integrated map 56 to the map storage unit 25 (see Fig. 6).

<Second Map Creation Unit 102>

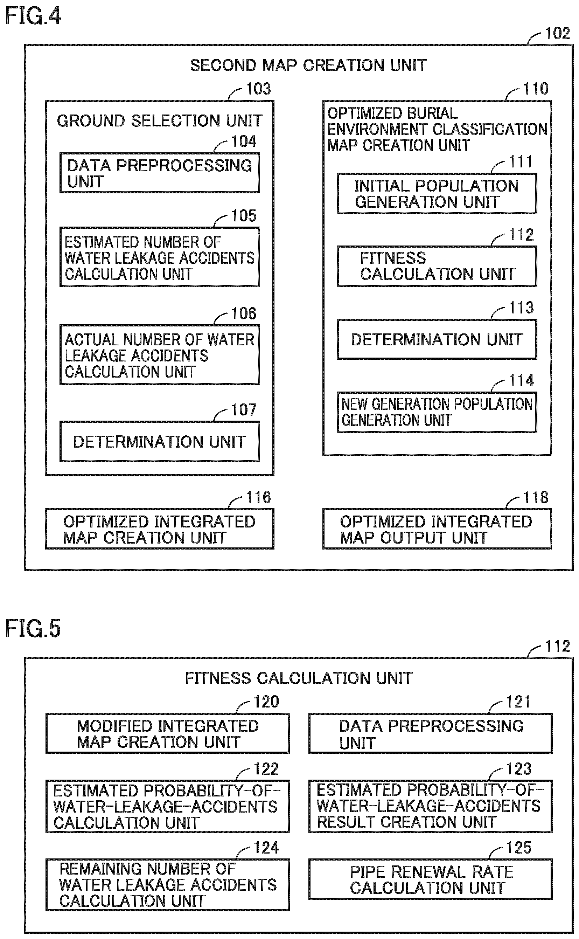

With reference to Figs. 2 and 4, the second map creation unit 102 creates an optimized integrated map 58 (see Fig. 15) for the region corresponding to the pipeline map 51 by optimizing the burial environment classification of the general integrated map 56 (general burial environment classification map 56a). The second map creation unit 102 includes a ground selection unit 103, an optimized burial environment classification map creation unit 110, an optimized integrated map creation unit 116, and an optimized integrated map output unit 118.

With reference to Fig. 4, the ground selection unit 103 selects a ground ID as a candidate for optimizing the burial environment classification from all the ground IDs included in the general integrated map 56. With reference to Fig. 4, the ground selection unit 103 includes a data preprocessing unit 104, an estimated number of water leakage accidents calculation unit 105, an actual number of water leakage accidents calculation unit 106, and a determination unit 107.

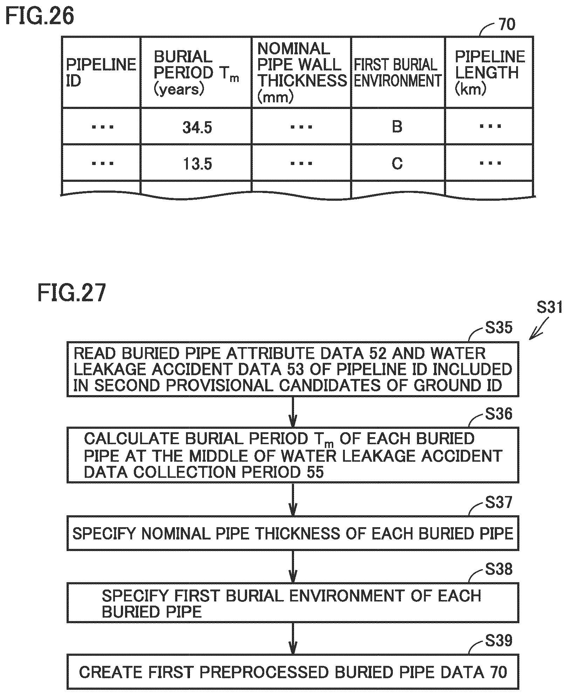

The data preprocessing unit 104 (see Fig. 4) creates first preprocessed buried pipe data 70 (see Fig. 26) based on the general integrated map 56 (see Fig. 14), the buried pipe data 50 (see Figs. 11 and 12), and the water leakage accident data 53 (see Fig. 13).

With reference to Fig. 4, the estimated number of water leakage accidents calculation unit 105 calculates an estimated number of water leakage accidents per unit time during the water leakage accident data collection period 55 (see Fig. 13) for each second provisional candidate of the ground ID to be described later. The estimated number of water leakage accidents per unit time refers to an estimated number of water leakage accidents occurred in each second provisional candidate of the ground ID per unit time. For example, the unit time is one year, and the unit for the estimated number of water leakage accidents is case/year.

With reference to Fig. 4, the actual number of water leakage accidents calculation unit 106 calculates an actual number of water leakage accidents per unit time during the water leakage accident data collection period 55 (see Fig. 13) for each second provisional candidate of the ground ID to be described later. For example, the unit time is one year, the actual number of water leakage accidents per unit time is an annual average of the actual number of water leakage accidents occurred in each second provisional candidate of the ground ID during the water leakage accident data collection period 55, and the unit for the actual number of water leakage accidents per unit time is case/year.

With reference to Fig. 4, the determination unit 107 determines whether or not the difference between the estimated number of water leakage accidents and the actual number of water leakage accidents is equal to or less than a reference value for each second provisional candidate of the ground ID to be described later. The determination unit 107 excludes a ground ID whose difference is equal to or less than the reference value from the second provisional candidates of the ground ID. The determination unit 107 leaves a ground ID whose difference is greater than the reference value in the second provisional candidates of the ground ID.

With reference to Fig. 4, the optimized burial environment classification map creation unit 110 creates the optimized burial environment classification map 58a by optimizing a burial environment classification of the ground ID selected by the ground selection unit 103 by machine learning. With reference to Fig. 4, the optimized burial environment classification map creation unit 110 includes an initial population generation unit 111, a fitness calculation unit 112, a determination unit 113, and a new generation population generation unit 114.

The initial population generation unit 111 randomly changes the burial environment classification of the ground ID selected by the ground selection unit 103 from the general burial environment classification map 56a, thereby generating an initial population that includes a plurality of burial environment classification map candidates. The entirety of the plurality of burial environment classification map candidates is referred to as a "population".

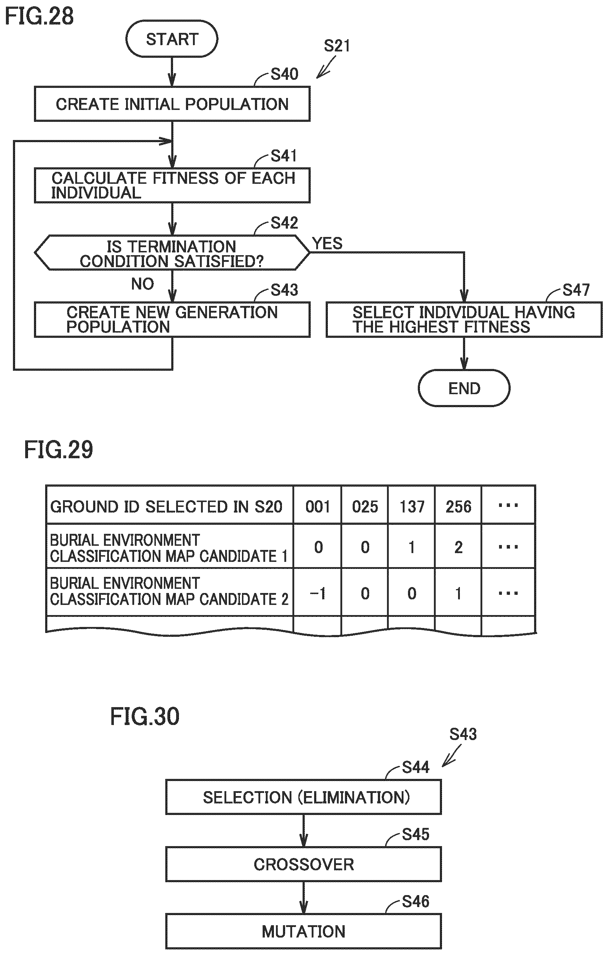

The fitness calculation unit 112 calculates fitness for each individual constituting an initial population or a new generation population (hereinafter, the initial population and the new generation population are collectively referred to as the "current generation population"). The "individual" refers to each of a plurality of burial environment map candidates constituting the current generation population. The individual is composed of a plurality of genes. As illustrated in Fig. 29, for example, each of the plurality of genes refers to the number of steps to change the burial environment classification of the ground ID selected in step S21. With reference to Fig. 5, the fitness calculation unit 112 includes a modified integrated map creation unit 120, a data preprocessing unit 121, an estimated probability-of-water-leakage-accidents calculation unit 122, an estimated probability-of-water-leakage-accidents result creation unit 123, a remaining number of water leakage accidents calculation unit 124, and a pipe renewal rate calculation unit 125.

With reference to Fig. 5, the modified integrated map creation unit 120 creates a modified integrated map corresponding to an individual (step S50). Specifically, the modified integrated map creation unit 120 changes the burial environment classification of a ground ID corresponding to a non-zero gene included in the individual among the ground IDs included in the general integrated map 56 (general burial environment classification map 56a) by the number of steps to change the burial environment classification expressed by the non-zero gene. Thus, a modified integrated map corresponding to the individual is created.

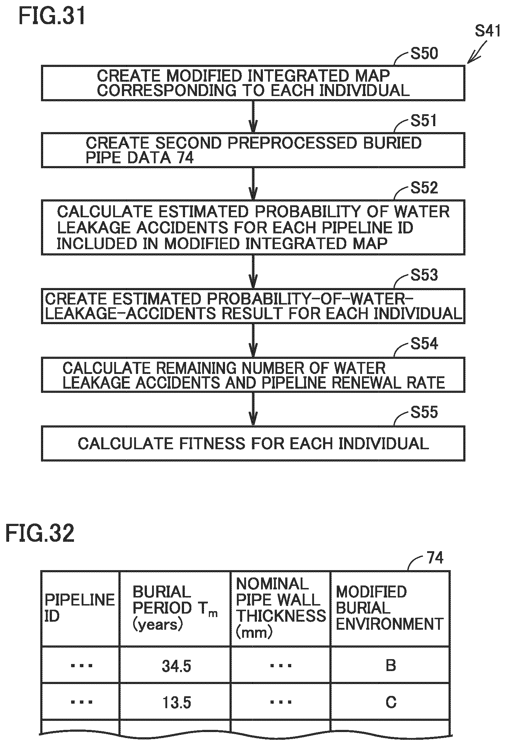

With reference to Fig. 5, the data preprocessing unit 121 creates second preprocessed buried pipe data 74 (see Fig. 32) based on the modified integrated map, the buried pipe attribute data 52 (see Fig. 12), and the water leakage accident data 53 (see Fig. 13).

With reference to Fig. 5, the estimated probability-of-water-leakage-accidents calculation unit 122 calculates an estimated probability of water leakage accidents of the buried pipe for each pipeline ID included in the modified integrated map. Specifically, the estimated probability-of-water-leakage-accidents calculation unit 122 reads a pipeline ID, and a modified burial environment and a nominal pipe wall thickness corresponding to the pipeline ID from the second preprocessed buried pipe data 74 (see Fig. 32). The estimated probability-of-water-leakage-accidents calculation unit 122 selects, from a plurality of probability-of-water-leakage-accidents prediction models 28 (see Fig. 6) stored in the probability-of-water-leakage-accidents prediction model storage unit 27 (see Fig. 6), a probability-of-water-leakage-accidents prediction model 28 suitable for the read modified burial environment and the read nominal pipe wall thickness.

The estimated probability-of-water-leakage-accidents calculation unit 122 reads a pipeline ID and a burial period $T_m$ corresponding to the pipeline ID from the second preprocessed buried pipe data 74. The estimated probability-of-water-leakage-accidents calculation unit 122 inputs the burial period $T_m$ to the selected probability-of-water-leakage-accidents prediction model 28 to calculate an estimated probability of water leakage accidents $R_m$ at the middle of the water leakage accident data collection period 55 for each pipeline ID. The estimated probability of water leakage accidents refers to an estimated number of water leakage accidents occurred per unit time and per unit distance. The unit for the estimated probability of water leakage accidents $R_m$ is, for example, case/year/km.

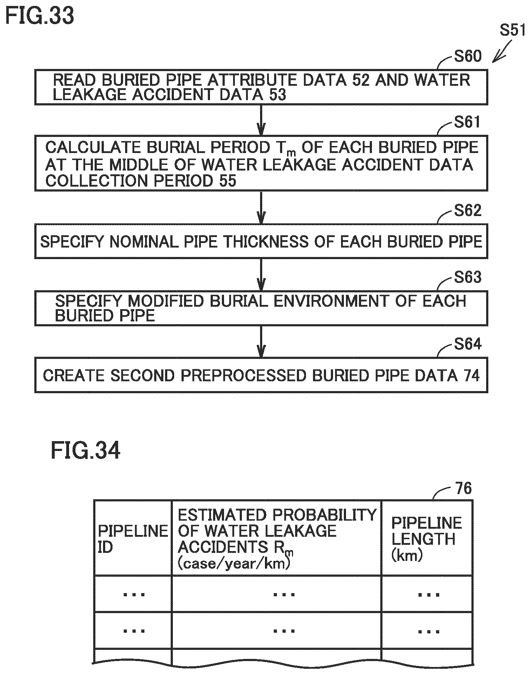

With reference to Fig. 5, the estimated probability-of-water-leakage-accidents result creation unit 123 creates an estimated probability-of-water-leakage-accidents result 76 (see Fig. 34) for each individual. Specifically, the estimated probability-of-water-leakage-accidents result creation unit 123 creates the estimated probability-of-water-leakage-accidents result 76 by associating the pipeline ID included in the modified integrated map, the estimated probability of water leakage accidents $R_m$, and the pipeline length (see Fig. 12) with each other.

With reference to Fig. 5, the remaining number of water leakage accidents calculation unit 124 calculates a remaining number of water leakage accidents by subtracting, from the total number of water leakage accidents included in the water leakage accident data 53, the number of water leakage accidents that could have been prevented from occurring if some of the pipeline IDs included in the estimated probability-of-water-leakage-accidents result 76 for each individual are renewed to new pipes in descending order of the estimated probability of water leakage accidents $R_m$ from the beginning of the water leakage accident data collection period 55.

With reference to Fig. 5, the pipe renewal rate calculation unit 125 calculates a pipe renewal rate by dividing the pipe length renewed from the beginning of the water leakage accident data collection period 55 by the total pipe length of the pipeline ID included in the estimated probability-of-water-leakage-accidents result 76 for each individual.

With reference to Fig. 4, the determination unit 113 performs a termination determination to terminate the generation of the new generation population. The determination unit 113 determines whether or not a termination condition is satisfied. The termination condition is, for example, that individuals having the highest fitness in the population are the same for a predetermined number of consecutive generations (for example, 50 generations).

With reference to Fig. 4, if the termination condition is not satisfied, the new generation population generation unit 114 generates a new generation population.

With reference to Fig. 4, the optimized integrated map creation unit 116 combines the pipeline map 51, the optimized burial environment classification map 58a, and the ground ID map 56b to create an optimized integrated map 58 (see Fig. 15).

With reference to Fig. 4, the optimized integrated map output unit 118 outputs the optimized integrated map 58 to the map storage unit 25 (see Fig. 6). The optimized integrated map output unit 118 outputs the optimized integrated map 58 to at least one of the display 14 (see Fig. 1), the storage medium 18 (see Fig. 1), or the storage 19 (see Fig. 1).

With reference to Fig. 2, the buried pipe deterioration degree prediction unit 130 predicts a deterioration degree (for example, an estimated probability of water leakage accidents) for each buried pipe. The buried pipe deterioration degree prediction unit 130 includes a data preprocessing unit 131, a buried pipe deterioration degree calculation unit 132, a buried pipe deterioration degree prediction result creation unit 133, and a buried pipe deterioration degree prediction result output unit 134.

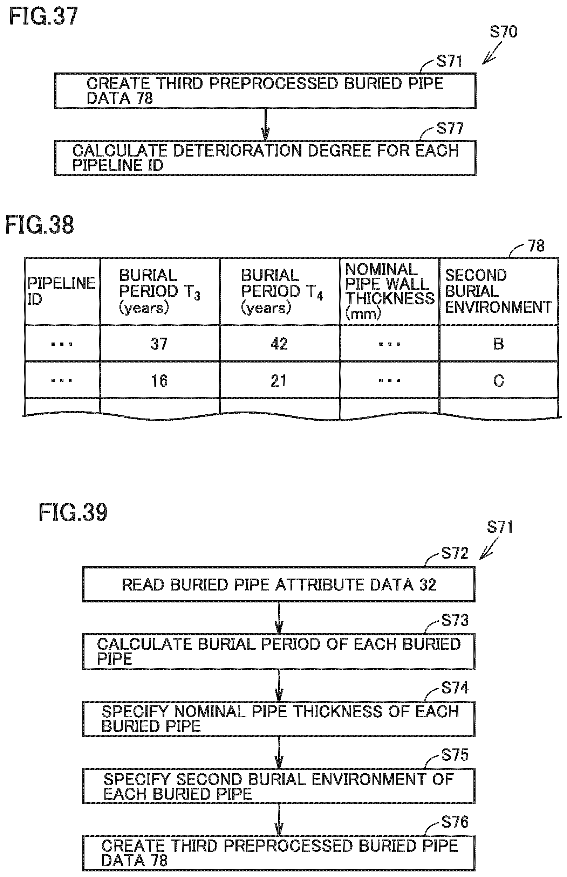

The data preprocessing unit 131 creates third preprocessed buried pipe data 78 (see Fig. 38) for each pipeline ID included in the optimized integrated map 58 based on the optimized integrated map 58 (see Fig. 15) and the buried pipe attribute data 52 (see Fig. 12).

The buried pipe deterioration degree calculation unit 132 calculates a deterioration degree for each pipeline ID included in the optimized integrated map 58. The deterioration degree is, for example, an estimated probability of water leakage accidents. The estimated probability of water leakage accidents refers to an estimated number of water leakage accidents occurred per unit time and per unit distance. The unit for the estimated probability of water leakage accidents is, for example, case/year/km.

The buried pipe deterioration degree prediction result creation unit 133 creates the buried pipe deterioration degree prediction result 65 (see Figs. 18 and 19). The buried pipe deterioration degree prediction result 65 may be the buried pipe deterioration degree prediction table 66 (see Fig. 18), the buried pipe deterioration degree prediction map 67 (see Fig. 19), or both. In the buried pipe deterioration degree prediction map 67, the deterioration degree (for example, the probability of estimated water leakage accidents) for each buried pipe is illustrated in the map for each pipeline ID. In the buried pipe deterioration degree prediction table 66, the pipeline ID and the deterioration degree (for example, the estimated probability of water leakage accidents) are associated with each other.

The buried pipe deterioration degree prediction result output unit 134 (see Fig. 2) outputs the buried pipe deterioration degree prediction result 65 (see Figs. 18 and 19) to the buried pipe deterioration degree prediction result storage unit 29 (see Fig. 6). The buried pipe deterioration degree prediction result output unit 134 outputs the buried pipe deterioration degree prediction result 65 to at least one of the display 14, the storage medium 18, or the storage 19 illustrated in Fig. 1.

<Method of Creating Correspondence Table 46>

A method of creating the correspondence table 46 will be described with reference to Fig. 20. The correspondence table 46 is created by the correspondence table creation unit 90.

The corrosion rate calculation unit 91 calculates the corrosion rate of a survey pipe for each survey number (step S1). Specifically, the corrosion rate calculation unit 91 reads the survey pipe data 40 (see Fig. 7) from the survey pipe data storage unit 21 (Fig. 6). The corrosion rate calculation unit 91 calculates a difference between the survey year (see Fig. 7) and the installation year of a survey pipe (see Fig. 7) as the burial period of the survey pipe. The corrosion rate calculation unit 91 calculates the corrosion rate of the survey pipe by dividing the corrosion depth of the survey pipe (see Fig. 7) by the burial period of the survey pipe.

The geological information acquisition unit 92 acquires geological information for the survey site (see Fig. 7) (step S2). Specifically, the geological information acquisition unit 92 reads the survey pipe data 40 (see Fig. 7) from the survey pipe data storage unit 21 (see Fig. 6) and reads the geological map 42 from the geological map database unit 22 (see Fig. 6). The geological information acquisition unit 92 refers to the survey pipe data 40 (see Fig. 7) and the geological map database unit 22 to acquire geological information for the survey site (see Fig. 7). The ground ID assignment unit 93 assigns a ground ID to the corresponding geological information (such as a combination of the ground surface geological features and the topography) (step S3).

The representative corrosion rate calculation unit 94 calculates a representative corrosion rate for each ground ID (step S4). The representative corrosion rate for each ground ID is, for example, an average corrosion rate for each ground ID or a median corrosion rate for each ground ID. When the representative corrosion rate for each ground ID is an average corrosion rate for each ground ID, the representative corrosion rate calculation unit 94 calculates an average value of the corrosion rates for the survey pipes to which the same ground ID is assigned. When the representative corrosion rate for each ground ID is a median corrosion rate for each ground ID, the representative corrosion rate calculation unit 94 calculates a 50th percentile value of the corrosion rates for the survey pipes to which the same ground ID is assigned.

The burial environment classification unit 95 classifies the survey pipe data 40 into the burial environments A to D based on the type of soil (see Fig. 7) and the soil resistivity (see Fig. 7) (step S5). The correspondence table generation unit 96 creates the correspondence table 46 (see Fig. 9) by associating the geological information, the ground ID, the representative corrosion rate, and the burial environment with each other (step S6). The correspondence table output unit 97 outputs the correspondence table 46 to the correspondence table storage unit 23 (see Fig. 6) (step S7). The correspondence table 46 is stored in the correspondence table storage unit 23.

<Method of Creating Optimized Integrated Map 58>

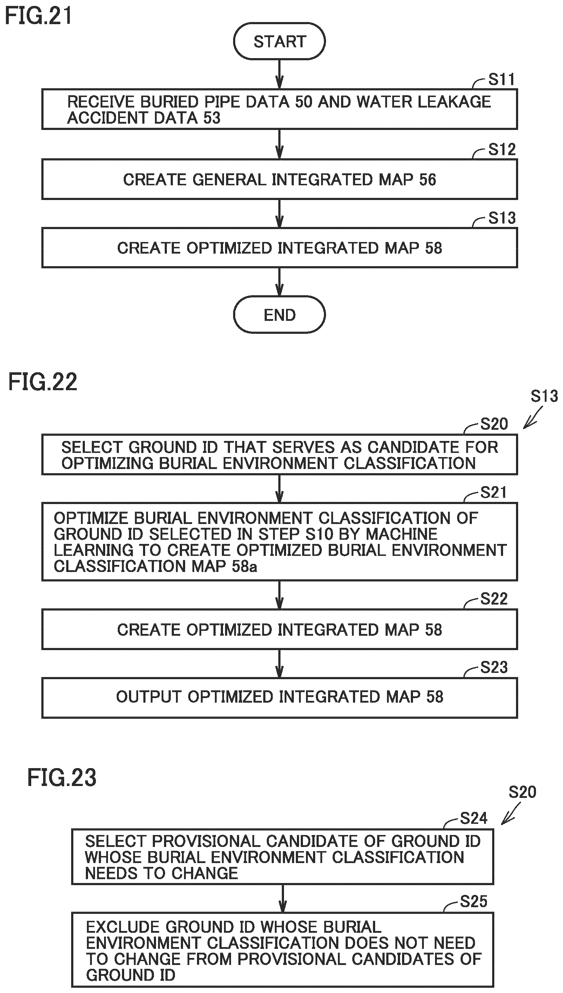

A method of creating the optimized integrated map 58 (see Fig. 15) that includes the optimized burial environment classification map 58a (see Fig. 15) will be described with reference to Figs. 21 to 35. The method of creating the optimized integrated map 58 is performed by the buried pipe data reception unit 99 (see Fig. 2) and the map creation unit 100 (see Fig. 2).

With reference to Fig. 21, the method of creating optimized burial environment classification map 58a according to the present embodiment includes a step of receiving buried pipe data 50 (see Figs. 11 and 12) and water leakage accident data 53 (see Fig. 13) from a client (step S11), a step of creating a general integrated map 56 (see Fig. 14) (step S12), and a step of creating an optimized integrated map 58 (see Fig. 15) (step S13).

With reference to Fig. 21, the buried pipe data reception unit 99 (see Fig. 2) receives a buried pipe data 50 (see Figs. 11 and 12) and a water leakage accident data 53 (see Fig. 13) from a client (step S11). The buried pipe data 50 includes, for example, a pipeline map 51 (see Fig. 11) and buried pipe attribute data 52 (see Fig. 12). The buried pipe data reception unit 99 outputs the buried pipe data 50 and the water leakage accident data 53 to the buried pipe data storage unit 24 (see Fig. 6). The buried pipe data 50 and the water leakage accident data 53 are stored in the buried pipe data storage unit 24.

With reference to Fig. 21, the first map creation unit 101 (see Fig. 2) creates a general integrated map 56 (see Fig. 14) (step S12).

Specifically, the first map creation unit 101 reads the pipeline map 51 (see Fig. 11) from the buried pipe data storage unit 24 (see Fig. 6). The first map creation unit 101 reads the geological map 42 (for example, the subsurface geological map 43 and the topography classification map 44) for the region corresponding to the pipeline map 51 from the geological map database unit 22 (see Figs. 6 and 8). The first map creation unit 101 reads the correspondence table 46 (see Fig. 9) from the correspondence table storage unit 23. The first map creation unit 101 creates the general integrated map 56 (see Fig. 14) by superimposing the burial environment and the ground ID for the region corresponding to the pipeline map 51 on the pipeline map 51.

The general integrated map 56 is a map in which the pipeline map 51, the general burial environment classification map 56a for the region corresponding to the pipeline map 51, and the ground ID map 56b for the region corresponding to the pipeline map 51 are combined. The general burial environment classification map 56a is a map indicating a burial environment for a region corresponding to the pipeline map 51. The ground ID map 56b is a map indicating a ground ID for a region corresponding to the pipeline map 51. The first map creation unit 101 outputs the general integrated map 56 (see Fig. 14) to the map storage unit 25. The general integrated map 56 is stored in the map storage unit 25.

With reference to Fig. 21, the second map creation unit 102 (see Fig. 2) creates an optimized integrated map 58 (see Fig. 15) by optimizing the burial environment classification of the general integrated map 56 (general burial environment classification map 56a) based on the water leakage accident data 53 (step S13).

Step S13 will be described in detail with reference to Fig. 22. Step S13 includes a step of selecting a ground ID that serves as a candidate for optimizing the burial environment classification from all the ground IDs included in the general burial environment classification map 56a (step S20), a step of creating an optimized burial environment classification map 58a by optimizing the burial environment classification of the ground ID selected in step S20 by machine learning (step S21), a step of creating an optimized integrated map 58 (step S22), and a step of outputting the optimized integrated map 58 (step S23).

Step S20 will be described in detail with reference to Fig. 23.

The second map creation unit 102 (see Fig. 2) reads the general integrated map 56 from the map storage unit 25 (see Fig. 6). The ground selection unit 103 (see Fig. 4) selects a provisional candidate of a ground ID whose burial environment classification needs to change from all the ground IDs included in the general integrated map 56 (general burial environment classification map 56a) (step S24).

For example, in a case where no water leakage accident is recorded in the water leakage accident data 53 (see Fig. 13) during the water leakage accident data collection period 55 (see Fig. 13) in a ground ID which is assigned a burial environment classification (for example, the burial environment A or the burial environment B) illustrating a relatively high corrosivity in the general integrated map 56 (general burial environment classification map 56a), it is necessary to change the burial environment classification of the ground ID to a burial environment classification having a lower corrosivity to the buried pipe (for example, the burial environment C or the burial environment D). Therefore, the ground selection unit 103 (see Fig. 4) refers to the general integrated map 56 (general burial environment classification map 56a) and the water leakage accident data 53 to select, from the ground IDs each of which is assigned a burial environment classification (for example, the burial environment A or the burial environment B) indicating a relatively high corrosivity in the general integrated map 56 (general burial environment classification map 56a), a ground ID which is recorded with no water leakage accident in the water leakage accident data 53 during the water leakage accident data collection period 55 as the first provisional candidate of the ground ID whose burial environment classification needs to change.

The burial environment classification indicating a relatively high corrosivity refers to a burial environment classification indicating a higher corrosivity than a burial environment classification (for example, the burial environment D) indicating the lowest corrosivity among a plurality of burial environment classifications (for example, the burial environment classifications A to D). The burial environment classification indicating a relatively high corrosivity includes, for example, a burial environment classification (for example, the burial environment A) indicating the highest corrosivity among a plurality of burial environment classifications (for example, the burial environment classifications A-D) and a burial environment classification (for example, the burial environment B) indicating a second highest corrosivity among a plurality of burial environment classifications (for example, the burial environment classifications A-D).

On the other hand, in a case where a water leakage accident is recorded in the water leakage accident data 53 (see Fig. 13) during the water leakage accident data collection period 55 (see Fig. 13) in a ground ID which is assigned a burial environment classification (for example, the burial environment B, the burial environment C, or the burial environment D) indicating a relatively low corrosivity on the general integrated map 56 (general burial environment classification map 56a), it is necessary to change the burial environment classification of the ground ID to a burial environment classification (for example, the burial environment A or the like) having a higher corrosivity to the buried pipe. Therefore, the ground selection unit 103 (see Fig. 4) refers to the general integrated map 56 (general burial environment classification map 56a) and the water leakage accident data 53 to select, from the ground IDs each of which is assigned a burial environment classification (for example, the burial environment B, the burial environment C, or the burial environment D) indicating a relatively low corrosivity on the general integrated map 56 (general burial environment classification map 56a), a ground ID which is recorded with a water leakage accident in the water leakage accident data 53 during the water leakage accident data collection period 55 as the second provisional candidate of the ground ID whose burial environment classification needs to change.

The burial environment classification indicating a relatively low corrosivity refers to a burial environment classification indicating a lower corrosivity than a burial environment classification (for example, the burial environment A) indicating the highest corrosivity among a plurality of burial environment classifications (for example, the burial environment classifications A to D). The burial environment classification indicating a relatively low corrosivity includes, for example, a burial environment classification (for example, the burial environment D) indicating the lowest corrosivity among a plurality of burial environment classifications (for example, the burial environment classifications A-D), a burial environment classification (for example, the burial environment C) indicating a second lowest corrosivity among a plurality of burial environment classifications (for example, the burial environment classifications A-D), and a burial environment classification (for example, the burial environment B) indicating the third lowest corrosivity among a plurality of burial environment classifications (for example, the burial environment classifications A-D).

With reference to Fig. 23, the ground selection unit 103 (see Fig. 4) excludes a ground ID whose burial environment classification does not need to change from the provisional candidates of the ground ID (step S25). For example, even in the case of the ground ID which is assigned a burial environment classification (e.g., the burial environment A) indicating a relatively high corrosivity on the general integrated map 56 (general burial environment classification map 56a) but is recorded with no water leakage accident in the water leakage accident data 53 (see Fig. 13) during the water leakage accident data collection period 55 (see Fig. 13), it is not necessary to change the burial environment classification for the ground ID which has a high corrosivity to the buried pipe. Therefore, the ground selection unit 103 refers to the general integrated map 56 (general burial environment classification map 56a) and the correspondence table 46 (see Fig. 9), and excludes the ground ID whose representative corrosion rate is equal to or higher than the reference corrosion rate from the first provisional candidates of the ground ID as the ground ID which has a high corrosivity to the buried pipe.

In addition, it is also not necessary to change the burial environment classification of a ground ID for which the difference between the estimated number of water leakage accidents per unit time during the water leakage accident data collection period 55 (see Fig. 13) calculated by the probability-of-water-leakage-accidents prediction model 28 and the actual number of water leakage accidents per unit time during the water leakage accident data collection period 55 obtained from the water leakage accident data 53 is equal to or less than the reference value. Therefore, the ground selection unit 103 (see Fig. 4) excludes, from the second provisional candidates of the ground ID, the ground ID for which the difference between the estimated number of water leakage accidents per unit time during the water leakage accident data collection period 55 calculated by the probability-of-water-leakage-accidents prediction model 28 and the actual number of water leakage accidents per unit time during the water leakage accident data collection period 55 obtained from the water leakage accident data 53 is equal to or less than the reference value.

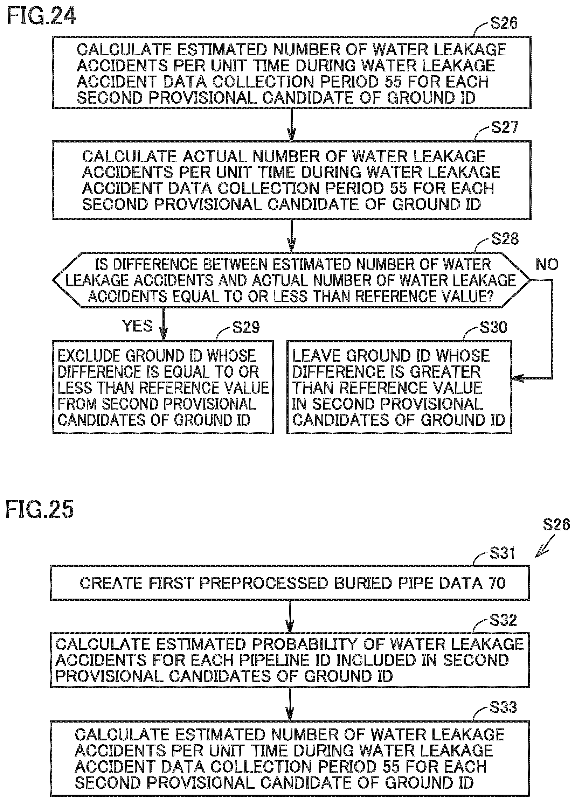

Specifically, with reference to Fig. 24, the estimated number of water leakage accidents calculation unit 105 (see Fig. 4) calculates the estimated number of water leakage accidents per unit time during the water leakage accident data collection period 55 for each second provisional candidate of the ground ID based on the probability-of-water-leakage-accidents prediction model 28 (see Fig. 6 and Fig. 17) and the general integrated map 56 (see Fig. 14) (step S26). Step S26 will be described in detail with reference to Fig. 25.

The data preprocessing unit 104 (see Fig. 4) creates first preprocessed buried pipe data 70 (see Fig. 26) for each pipeline ID included in the second provisional candidates of the ground ID based on the second provisional candidates of the ground ID, the general integrated map 56 (see Fig. 14), the buried pipe data 50 (see Figs. 11 and 12), and the water leakage accident data 53 (see Fig.

13) (step S31). Step S31 will be described in detail with reference to Fig. 27.

The data preprocessing unit 104 refers to the second provisional candidates of the ground ID, and reads the buried pipe attribute data 52 (see Fig. 12) and the water leakage accident data 53 (see Fig. 13) of a pipeline ID included in the second provisional candidates of the ground ID from the buried pipe data storage unit 24 (see Fig. 6) (step S35).

The data preprocessing unit 104 (see Fig. 4) calculates, for each pipeline ID included in the second provisional candidates of the ground ID, a burial period $T_m$ of a buried pipe at the middle between the beginning and the end of the water leakage accident data collection period 55 (see Fig. 13) (step S36). Specifically, the data preprocessing unit 104 calculates the middle of the water leakage accident data collection period 55 by dividing the sum of the beginning of the water leakage accident data collection period 55 and the end of the water leakage accident data collection period 55 by two. The data preprocessing unit 104 calculates, for each pipeline ID included in the second provisional candidates of the ground ID, a difference between the middle of the water leakage accident data collection period 55 and the installation year of the buried pipe (see Fig. 12) as the burial period $T_m$ of the buried pipe at the middle of the water leakage accident data collection period 55.

The data preprocessing unit 104 specifies the nominal pipe wall thickness of the buried pipe for each pipeline ID included in the second provisional candidates of the ground ID (step S37). Specifically, the data preprocessing unit 104 reads the nominal pipe wall thickness data 60 (see Fig. 16) from the nominal pipe wall thickness database unit 26 (see Fig. 6). The data preprocessing unit 104 refers to the installation year, the nominal diameter, the type of joint, and the type of pipe wall thickness (see Fig. 12) of the buried pipe attribute data 52 and the nominal pipe wall thickness data 60 to determine the nominal pipe wall thickness of the buried pipe for each pipeline ID included in the second provisional candidates of the ground ID.

The data preprocessing unit 104 refers to the second provisional candidates of the ground ID and the general integrated map 56 (see Fig. 14) to specify a burial environment (hereinafter referred to as a "first burial environment") of the buried pipe for each pipeline ID included in the second provisional candidates of the ground **ID** (step S38).

The data preprocessing unit 104 combines the pipeline ID, the burial period $T_m$, the nominal pipe wall thickness, the first burial environment, and the pipeline length (see Fig. 12) to create the first preprocessed buried pipe data 70 (see Fig. 26) for each pipeline ID included in the second provisional candidates of the ground **ID** (step S39).

With reference to Fig. 25, the estimated number of water leakage accidents calculation unit 105 (see Fig. 4) calculates an estimated probability of water leakage

accidents $R_m$ of the buried pipe for each pipeline ID included in the second provisional candidates of the ground ID (step S32).

Specifically, the estimated number of water leakage accidents calculation unit 105 reads a pipeline ID, and the first burial environment and the nominal pipe wall thickness corresponding to the pipeline ID from the first preprocessed buried pipe data 70. The estimated number of water leakage accidents calculation unit 105 selects, from a plurality of probability-of-water-leakage-accidents prediction models 28 stored in the probability-of-water-leakage-accidents prediction model storage unit 27, a probability-of-water-leakage-accidents prediction model 28 suitable for the read first burial environment and nominal pipe wall thickness. For example, when the read first burial environment is the burial environment B and the read nominal pipe wall thickness is 7.5 mm, the curve of the burial environment B in Fig. 17 represents the leakage accident rate prediction model 28 suitable for the read first burial environment and the read nominal pipe wall thickness.

The estimated number of water leakage accidents calculation unit 105 reads a pipeline ID and a burial period $T_m$ corresponding to the pipeline ID from the first preprocessed buried pipe data 70. The estimated number of water leakage accidents calculation unit 105 inputs the burial period $T_m$ to the selected probability-of-water-leakage-accidents prediction model 28 to calculate an estimated probability of water leakage accidents $R_m$ at the middle of the water leakage accident data collection period 55 for each pipeline ID (see Fig. 17). The unit for the estimated probability of water leakage accidents $R_m$ is, for example, case/year/km.

With reference to Fig. 25, the estimated number of water leakage accidents calculation unit 105 (see Fig. 4) calculates the estimated number of water leakage accidents per unit time during the water leakage accident data collection period 55 for each second provisional candidate of the ground ID (step S33). For example, the unit time is one year, and the unit for the estimated number of water leakage accidents is case/year. Specifically, the estimated number of water leakage accidents calculation unit 105 reads, from the first preprocessed buried pipe data 70 (see Fig. 26), a pipeline **ID** included in the second provisional candidates of the ground ID and a pipeline length corresponding to the pipeline ID. The estimated number of water leakage accidents calculation unit 105 calculates the product of the estimated probability of water leakage accidents $R_m$ for each pipeline ID and the pipeline length for each pipeline ID. The estimated number of water leakage accidents calculation unit 105 calculates the sum of the products for each second provisional candidate of the ground ID. Thus, the estimated number of water leakage accidents calculation unit 105 calculates the estimated water leakage accident number per unit time during the water leakage accident data collection period 55 for each second provisional candidate of the ground ID.

With reference to Fig. 24, the actual number of water leakage accidents calculation unit 106 (see Fig. 4) calculates an actual number of water leakage accidents per unit time during the water leakage accident data collection period 55 for each second provisional candidate of the ground **ID** with reference to the general integrated map 56 and the water leakage accident data 53 (step S27). For example, the unit time is one year, the actual number of water leakage accidents per unit time refers to an annual average of the actual number of water leakage accidents occurred in each ground ID during the water leakage accident data collection period 55, and the unit for the actual number of water leakage accidents per unit time is case/year.

Specifically, the actual number of water leakage accidents calculation unit 106 calculates the actual number of water leakage accidents occurred during the water leakage accident data collection period 55 for each second provisional candidate of the ground ID with reference to the second provisional candidates of the ground ID and the water leakage accident data 53. The actual number of water leakage accidents calculation unit 106 divides the actual number of water leakage accidents for each ground ID occurred during the water leakage accident data collection period 55 by the water leakage accident data collection period 55. Thus, the actual number of water leakage accidents calculation unit 106 calculates the actual number of water leakage accidents per unit time during the water leakage accident data collection period 55 for each second provisional candidate of the ground ID.

With reference to Fig. 24, the determination unit 107 (see Fig. 4) determines, for each second provisional candidate of the ground ID, whether or not the difference between the estimated number of water leakage accidents calculated in step S26 and the actual number of water leakage accidents calculated in step S27 is equal to or less than a reference value (step S28). The determination unit 107 excludes the ground ID whose difference is equal to or less than the reference value from the second provisional candidates of the ground ID (step S29). The determination unit 107 leaves the ground ID whose difference is greater than the reference value in the second provisional candidate of the ground ID (step S30). Thus, the ground selection unit 103 selects a ground ID as the candidate for optimizing the burial environment classification from all the ground IDs included in the general integrated map 56.

With reference to Fig. 22, step S21 is performed by the optimized burial environment classification map creation unit 110. Step S21 will be described in detail with reference to Figs. 22 and 28 to 35. As an example of the machine learning in step S21, an evolutionary calculation method such as a genetic algorithm, an evolutionary algorithm or swarm intelligence, a greedy method, a nearest neighbor search method, a local search method, a mathematical optimization method, or the like may be used. Thus, an optimized burial environment classification map 58a (see Fig. 15) that reflects the optimized burial environment classification is created. As an example method, a genetic algorithm is used to create the optimized burial environment classification map 58a.

With reference to Fig. 28, the initial population generation unit 111 randomly changes the burial environment classification of the ground ID selected from the general burial environment classification map 56a in step S20 (see Fig. 22), thereby generating an initial population including a plurality of burial environment classification map candidates (step S40). Each of the plurality of burial environment map candidates is referred to as an "individual". The individual is composed of a plurality of genes. As illustrated in Fig. 29, for example, each of the plurality of genes refers to the number of steps to change the burial environment classification of the ground ID selected in step S21.

Specifically, when the burial environment classification of a certain ground ID is changed from the burial environment B to the burial environment A, in other words, when the burial environment classification of the certain ground ID is changed to a burial environment classification having a higher corrosivity to the buried pipe by one rank, it is expressed as a gene of 1. When the burial environment classification of a certain ground ID is changed to a burial environment classification having a lower corrosivity to the buried pipe by one rank, in other words, when the burial environment classification of the certain ground ID is changed from the burial environment C to the burial environment D, it is expressed as a gene of -1. When the burial environment classification of a certain ground ID is changed to a burial environment classification having a higher corrosivity to the buried pipe by two ranks, in other words, when the burial environment classification of the certain ground ID is changed from the burial environment C to the burial environment A, it is expressed as a gene of 2. When the burial environment classification of a certain ground ID is changed to a burial environment classification having a lower corrosivity to the buried pipe by two ranks, in other words, when the burial environment classification of the certain ground ID is changed from the burial environment B to the burial environment D, it is expressed as a gene of -2.

With reference to Fig. 28, the fitness calculation unit 112 (see Fig. 4) calculates fitness for each individual constituting the initial population generated in step S40 or the new generation population generated in step S43 (hereinafter, the initial population and the new generation population are collectively referred to as the "current generation population") (step S41). Example fitness will be described later.

The determination unit 113 (see Fig. 4) performs a termination determination to terminate the generation of a new generation population. The determination unit 113 determines whether or not a termination condition is satisfied (step S42). The termination condition is, for example, that individuals having the highest fitness in the population are the same for a predetermined number of consecutive generations (for example, 50 generations).

If the termination condition is not satisfied in step S42, the new generation population generation unit 114 generates a new generation population (step S43). As an example, step S43 will be described with reference to Fig. 30.

In step S44, the new generation population generation unit 114 (see Fig. 4) selects a plurality of individuals from the current generation population as parents for the next generation. For example, the new generation population generation unit 114 selects those individuals having high fitness from the individuals constituting the current generation population, and eliminates (deletes) those individuals having low fitness from the individuals constituting the current generation population (elite strategy).

In step S45, the new generation population generation unit 114 (see Fig. 4) selects two individuals from the individuals selected in step S44, and performs a crossover process to swap genes between the two individuals. Thus, new individuals with recombined genes are generated. The number of individuals generated in step S45 is, for example, equal to the number of individuals eliminated (deleted) in step S44. Thus, the new generation population generation unit 114 generates a new population composed of the individuals selected in step S44 and the new individuals generated in step S45. For example, any known method such as a single-point crossover method, a multi-point crossover method, or a uniform crossover method can be used in the crossover process.

In step S46, the new generation population generation unit 114 (see Fig. 4) performs a mutation process to randomly swap genes with a predetermined probability on the individuals constituting the new population generated in step S45. Any known method can be used in the mutation process. Thus, a new generation population is created.

Then, the procedure returns to step S41 where the fitness calculation unit 112 (see Fig. 4) calculates the fitness of each individual constituting the new generation population. Steps S41 and S43 are repeated until the termination condition is satisfied in step S42.

If the termination condition is satisfied in step S42, the optimized burial environment classification map creation unit 110 (see Fig. 4) selects an individual having the highest fitness from the individuals constituting the current generation population (step S47). The optimized burial environment classification map creation unit 110 changes the burial environment classification of the ground ID corresponding to a non-zero gene included in the individual selected in step S47 from the ground IDs included in the general burial environment classification map 56a by the number of steps to change the burial environment classification expressed by the non-zero gene. Thus, an optimized burial environment classification map 58a (see Fig. 15) that reflects the optimized burial environment classification is created.

With reference to Fig. 22, the optimized integrated map creation unit 116 (see Fig. 4) combines the pipeline map 51, the optimized burial environment classification map 58a, and the ground ID map 56b to create an optimized integrated map 58 (see Fig. 15) (step S22). In step S23, the optimized integrated map output unit 118 (see Fig. 4) outputs the optimized integrated map 58 to the map storage unit 25 (see Fig. 6). The optimized integrated map 58 is stored in the map storage unit 25. The optimized integrated map output unit 118 outputs the optimized integrated map 58 to at least one of the display 14 (see Fig. 1), the storage medium 18 (see Fig. 1), or the storage 19 (see Fig. 1).

The step of calculating the fitness of each individual constituting the current generation population (step S41) will be described in detail with reference to Figs. 31 to 35.

With reference to Fig. 31, the modified integrated map creation unit 120 (see Fig. 5) creates a modified integrated map for each individual (step S50). Specifically, the modified integrated map creation unit 120 changes the burial environment classification of the ground ID corresponding to a non-zero gene included in the individual among the ground IDs included in the general integrated map 56 by the number of steps to change the burial environment classification expressed by the non-zero gene. Thus, the modified integrated map is created for each individual.

With reference to Fig. 31, the data preprocessing unit 121 (see Fig. 5) creates second preprocessed buried pipe data 74 (see Fig. 32) for each pipeline ID included in the modified integrated map based on the modified integrated map, the buried pipe attribute data 52 (see Fig. 12), and the water leakage accident data 53 (see Fig. 13) (step S51). The second preprocessed buried pipe data 74 is created by the same method as the first preprocessed buried pipe data 70 (see Fig. 26), but is created based on the modified integrated map instead of the general integrated map (see Fig. 14). Therefore, the second preprocessed buried pipe data 74 includes the modified burial environment included in the modified integrated map instead of the first burial environment of the first preprocessed buried pipe data 70 (see Fig. 26).

Specifically, with reference to Fig. 33, the data preprocessing unit 121 (see Fig. 5) refers to the modified integrated map, and reads the buried pipe attribute data 52 and the water leakage accident data 53 from the buried pipe data storage unit 24 (see Fig. 6) for the pipeline ID included in the modified integrated map (step S60).

The data preprocessing unit 121 (see Fig. 5) calculates, for each pipeline ID included in the modified integrated map, a burial period $T_m$ of a buried pipe at the middle between the beginning and the end of the water leakage accident data collection period 55 (step S61). Specifically, the data preprocessing unit 121 calculates the middle of the water leakage accident data collection period 55 by dividing the sum of the beginning of the water leakage accident data collection period 55 and the end of the water leakage accident data collection period 55 by two. The data preprocessing unit 121 calculates, for each pipeline ID included in the modified integrated map, a difference between the middle of the water leakage accident data collection period 55 and the installation year of the buried pipe (see Fig. 12) as the burial period $T_m$ of the buried pipe at the middle of the water leakage accident data collection period 55.

The data preprocessing unit 121 (see Fig. 5) specifies the nominal pipe wall thickness of the buried pipe for each pipeline ID included in the modified integrated map (step S62). Specifically, the data preprocessing unit 121 reads the nominal pipe wall thickness data 60 (see Fig. 16) from the nominal pipe wall thickness database unit 26 (see Fig. 6). The data preprocessing unit 121 refers to the installation year, the nominal diameter, the type of joint, and the type of pipe wall thickness (see Fig. 12) of the buried pipe attribute data 52 and the nominal pipe wall thickness data 60 to determine the nominal pipe wall thickness of the buried pipe for each pipeline ID included in the modified integrated map.

The data preprocessing unit 121 (see Fig. 5) refers to the modified integrated map to specify the modified burial environment of the buried pipe for each pipeline ID included in the modified integrated map (step S63).

The data preprocessing unit 121 (see Fig. 5) combines the pipeline ID, the burial period $T_m$, the nominal pipe wall thickness, and the modified burial environment to create the second preprocessed buried pipe data 74 (see Fig. 32) for each pipeline ID included in the modified integrated map (step S64).

With reference to Fig. 31, the estimated probability-of-water-leakage-accidents calculation unit 122 (see Fig. 5) calculates an estimated probability of water leakage accidents $R_m$ for each pipeline ID included in the modified integrated map (step S52). Specifically, the estimated probability-of-water-leakage-accidents calculation unit 122 reads a pipeline ID, and the modified burial environment and the nominal pipe wall thickness corresponding to the pipeline ID from the second preprocessed buried pipe data 74 (see Fig. 32). The estimated probability-of-water-leakage-accidents calculation unit 122 selects, from a plurality of probability-of-water-leakage-accidents prediction models 28 (see Fig. 6) stored in the probability-of-water-leakage-accidents prediction model storage unit 27 (see Fig. 6), a probability-of-water-leakage-accidents prediction model 28 suitable for the read modified burial environment and nominal pipe wall thickness.

The estimated probability-of-water-leakage-accidents calculation unit 122 reads a pipeline ID and the burial period $T_m$ corresponding to the pipeline ID from the second preprocessed buried pipe data 74. The estimated probability-of-water-leakage-accidents calculation unit 122 inputs the burial period $T_m$ to the selected probability-of-water-leakage-accidents prediction model 28 to calculate an estimated probability of water leakage accidents $R_m$ at the middle of the water leakage accident data collection period 55 for each pipeline ID. The unit for the estimated probability of water leakage accidents $R_m$ is, for example, case/year/km.

With reference to Fig. 31, the estimated probability-of-water-leakage-accidents result creation unit 123 refers to the modified integrated map, and reads the pipe length (see Fig. 12) of the pipeline ID included in the modified integrated map from the buried pipe data storage unit 24 (see Fig. 6). The estimated probability-of-water-leakage-accidents result creation unit 123 associates the pipeline ID, the estimated probability of water leakage accidents $R_m$, and the pipeline length (see Fig. 12) with each other. Thus, the estimated probability-of-water-leakage-accidents result creation unit 123 creates the estimated probability-of-water-leakage-accidents result 76 (see Fig. 34) for each individual (step S53).

With reference to Fig. 31, with reference to the estimated probability-of-water-leakage-accidents result 76 (see Fig. 34) and the water leakage accident data 53 (see Fig. 13) for each individual, the remaining number of water leakage accidents when at least some of the pipeline IDs included in the estimated probability-of-water-leakage-accidents result 76 for each individual are renewed to new pipelines in descending order of the estimated probability of water leakage accidents $R_m$ at the beginning of the water leakage accident data collection period 55, and a pipe renewal rate when at least some of the pipeline IDs included in the estimated probability-of-water-leakage-accidents result 76 for each individual are renewed to new pipelines in descending order of the estimated probability of water leakage accidents $R_m$ at the beginning of the water leakage accident data collection period 55 are calculated (step S54). An example method of calculating the remaining number of water leakage accidents and the pipeline renewal rate will be described.

If some of the pipeline IDs included in the estimated probability-of-water-leakage-accidents result 76 (see Fig. 34) for each individual are renewed to new pipelines in descending order of the estimated probability of water leakage accidents $R_m$ from the beginning of the water leakage accident data collection period 55 (see Fig. 13), the renewal of the pipelines can prevent the occurrence of a part of the water leakage accidents included in the water leakage accident data 53.

Therefore, the remaining number of water leakage accidents calculation unit 124 (see Fig. 5) calculates the remaining number of water leakage accidents by subtracting, from the total number of water leakage accidents included in the water leakage accident data 53 (see Fig. 13), the number of water leakage accidents that can be prevented from occurring when some of the pipeline IDs included in the estimated probability-of-water-leakage-accidents result 76 for each individual are renewed to new pipelines in descending order of the estimated probability of water leakage accidents $R_m$ from the beginning of the water leakage accident data collection period 55. The pipe renewal rate calculation unit 125 (see Fig. 5) calculates the pipe renewal rate by dividing the pipe length renewed from the beginning of the water leakage accident data collection period 55 by the total pipe length of the pipeline ID included in the estimated probability-of-water-leakage-accidents result 76 for each individual.

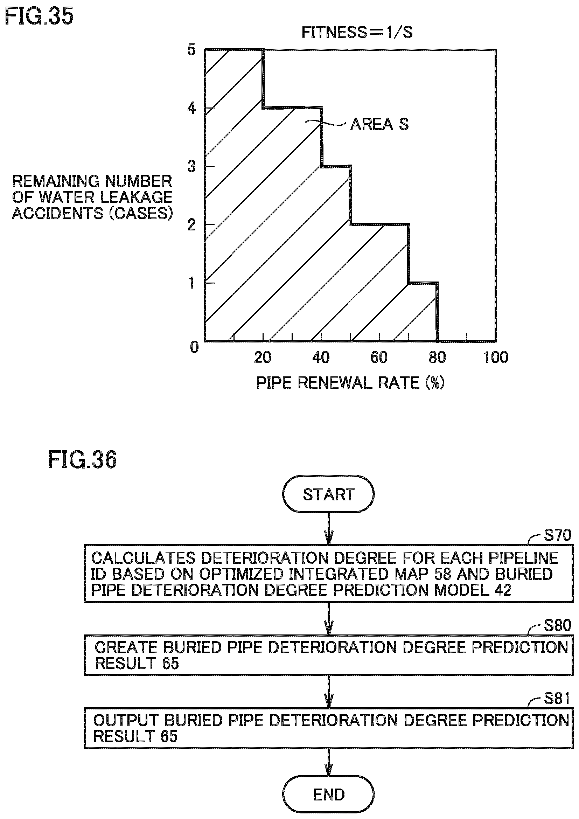

With reference to Fig. 31, the fitness calculation unit 112 (see Fig. 4) calculates fitness for each individual (step S55). Specifically, the fitness calculation unit 112 creates a graph (see Fig. 35) indicating a relationship between the pipeline renewal rate and the remaining number of water leakage accidents. The horizontal axis of the graph represents the pipeline renewal rate, and the vertical axis of the graph represents the remaining number of water leakage accidents. The smaller the area S (shaded area in Fig. 35) surrounded by the vertical axis, the horizontal axis and the line indicating the relationship between the pipeline renewal rate and the remaining number of water leakage accidents, the better the modified integrated map corresponding to an individual reflects the actual burial environment. Therefore, the fitness calculation unit 112 calculates the reciprocal of the area S as the fitness for each individual.

<Buried Pipe Deterioration Degree Prediction Method>

With reference to Figs. 36 to 40, a buried pipe deterioration degree prediction method according to the present embodiment will be described. The buried pipe deterioration degree prediction method is performed by the buried pipe deterioration degree prediction unit 130. An estimated probability of water leakage accidents will be described as an example of a deterioration degree for the buried pipe.

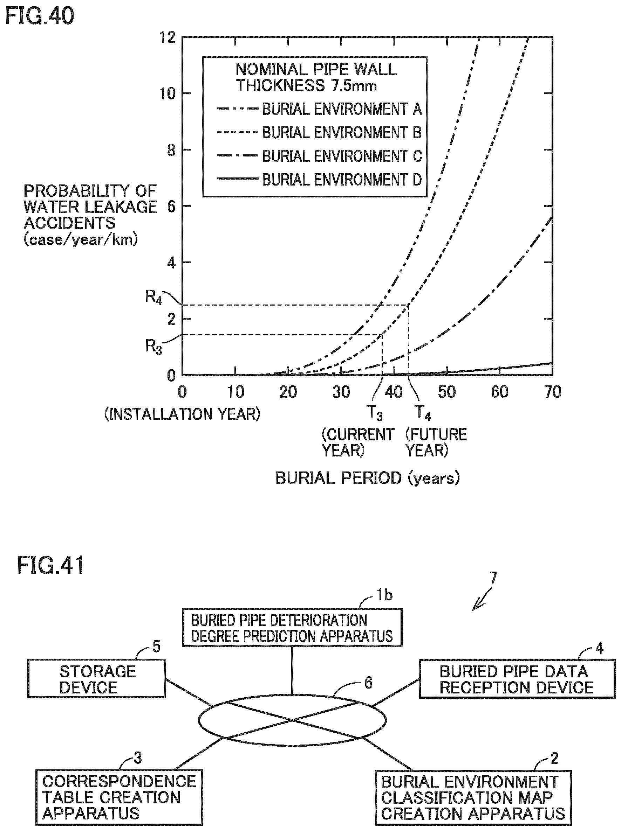

With reference to Fig. 36, the buried pipe deterioration degree prediction unit 130 calculates a deterioration degree (for example, an estimated probability of water leakage accidents) for each pipeline ID based on the optimized integrated map 58 (see Fig. 15) and the buried pipe deterioration degree prediction model (for example, the probability-of-water-leakage-accidents prediction model 28 (see Figs. 6 and 40)) (step S70). The deterioration degree (for example, the estimated probability of water leakage accidents) calculated in step S70 may be a deterioration degree (for example, an estimated probability of water leakage accidents) for each pipeline ID in the current year, a deterioration degree (for example, an estimated probability of water leakage accidents) for each pipeline ID in a future year, or both. Step S70 will be described in detail.

With reference to Fig. 37, the data preprocessing unit 131 (see Fig. 2) creates third preprocessed buried pipe data 78 (see Fig. 38) for each pipeline ID included in the optimized integrated map 58 based on the optimized integrated map 58 (see Fig. 15) and the buried pipe attribute data 52 (see Fig. 12) (step S71).

Specifically, with reference to Fig. 39, the data preprocessing unit 131 reads the optimized integrated map 58 from the map storage unit 25 (see Fig. 6). The data preprocessing unit 131 refers to the optimized integrated map 58, and reads the buried pipe attribute data 52 for each pipeline ID included in the optimized integrated map 58 from the buried pipe data storage unit 24 (see Fig. 6) (step S72).

The data preprocessing unit 131 (see Fig. 2) calculates a burial period of the buried pipe for each pipeline ID included in the optimized integrated map 58 (step S73). For example, in the case of calculating the estimated probability of water leakage accidents for each pipeline ID in the current year, the data preprocessing unit 131 calculates, for each pipeline ID included in the optimized integrated map 58, the difference between the current year and the installation year of the buried pipe (see Fig. 12) as a burial period $T_3$ of the buried pipe. In the case of calculating the estimated probability of water leakage accidents for each pipeline ID in a future year, the data preprocessing unit 131 calculates, for each pipeline ID included in the optimized integrated map 58, the difference between the future year and the installation year of the buried pipe (see Fig. 12) as a burial period $T_4$ of the buried pipe.

The data preprocessing unit 131 (see Fig. 2) specifies the nominal pipe wall thickness of the buried pipe for each pipeline ID included in the optimized integrated map 58 (step S74). Specifically, the data preprocessing unit 131 reads the nominal pipe wall thickness data 60 (see Fig. 16) from the nominal pipe wall thickness database unit 26 (see Fig. 6). The data preprocessing unit 131 refers to the installation year, the nominal diameter, the type of joint, and the type of pipe wall thickness (see Fig. 12) of the buried pipe attribute data 52 and the nominal pipe wall thickness data 60 to determine the nominal pipe wall thickness of the buried pipe for each pipeline ID included in the optimized integrated map 58.

The data preprocessing unit 131 (see Fig. 2) refers to the optimized integrated map 58 to specify the burial environment (second burial environment) of the buried pipe for each pipeline ID included in the optimized integrated map 58 (step S75).

The data preprocessing unit 131 (see Fig. 2) combines the pipeline ID, the burial period (for example, the burial period $T_3$ or the burial period $T_4$), the nominal pipe wall thickness, and the second burial environment to create the third preprocessed buried pipe data 78 (see Fig. 38) for each pipeline ID included in the optimized integrated map 58 (step S76).

With reference to Fig. 37, the buried pipe deterioration degree calculation unit 132 calculates a deterioration degree (for example, an estimated probability of water leakage accidents) for each pipeline ID included in the optimized integrated map 58 (step S77).

Specifically, the buried pipe deterioration degree calculation unit 132 reads a pipeline ID, and the second burial environment and the nominal pipe wall thickness corresponding to the pipeline ID from the third preprocessed buried pipe data 78 (see Fig. 38). The buried pipe deterioration degree calculation unit 132 selects, from a plurality of probability-of-water-leakage-accidents prediction models 28 (see Figs. 6 and 40) stored in the probability-of-water-leakage-accidents prediction model storage unit 27, a probability-of-water-leakage-accidents prediction model 28 suitable for the read second burial environment and nominal pipe wall thickness. For example, when the read second burial environment is the burial environment B and the read nominal pipe wall thickness is 7.5 mm, the curve of the burial environment B in Fig. 40 represents the leakage accident rate prediction model 28 suitable for the read second burial environment and the read nominal pipe wall thickness.

The buried pipe deterioration degree calculation unit 132 reads a pipeline ID and a burial period (for example, the burial period $T_3$ or the burial period $T_4$) corresponding to the pipeline ID from the third preprocessed buried pipe data 78 (see Fig. 38). The buried pipe deterioration degree calculation unit 132 inputs the burial period of the buried pipe (see Fig. 38) to the selected probability-of-water-leakage-accidents prediction model 28 to calculate a deterioration degree (for example, an estimated probability of water leakage accidents) for each pipeline ID (see Fig. 40). The estimated probability of water leakage accidents refers to an estimated number of water leakage accidents occurred per unit time and per unit distance. The unit for the estimated probability of water leakage accidents is, for example, case/year/km. The buried pipe deterioration degree calculation unit 132 may calculate a deterioration degree (for example, an estimated probability of water leakage accidents $R_3$) for each pipeline ID in the current year, may calculate a deterioration degree (for example, an estimated probability of water leakage accidents $R_4$) for each pipeline ID in a future year, or may calculate both.

The buried pipe deterioration degree prediction result creation unit 133 creates the buried pipe deterioration degree prediction result 65 (step S80). The buried pipe deterioration degree prediction result 65 may be the buried pipe deterioration degree prediction table 66 (see Fig. 18), the buried pipe deterioration degree prediction map 67 (see Fig. 19), or both.

Specifically, the buried pipe deterioration degree prediction result creation unit 133 associates the pipeline ID, the deterioration degree for the buried pipe (for example, the estimated probability of water leakage accidents), and the time (for example, the current year or the future year) at which the deterioration degree for the buried pipe is calculated with each other to create the buried pipe deterioration degree prediction table 66 (see Fig. 18). The buried pipe deterioration degree prediction result creation unit 133 reads the pipeline map 51 (see Fig. 11) from the buried pipe data storage unit 24 (see Fig.

6). The buried pipe deterioration degree prediction result creation unit 133 reflects in the pipeline map 51 the deterioration degree (for example, the estimated probability of water leakage accidents) of the buried pipe for each pipeline ID and the time (for example, the current year or the future year) at which the deterioration degree for the buried pipe is calculated to create a buried pipe deterioration degree prediction map 67 (see Fig. 19).

With reference to Fig. 36, in step S81, the buried pipe deterioration degree prediction result output unit 134 (see Fig. 2) outputs the buried pipe deterioration degree prediction result 65 to the buried pipe deterioration degree prediction result storage unit 29. The buried pipe deterioration degree prediction result 65 is stored in the buried pipe deterioration degree prediction result storage unit 29. The buried pipe deterioration degree prediction result output unit 134 (see Fig. 2) outputs the buried pipe deterioration degree prediction result 65 to at least one of the display 14, the storage medium 18, or the storage 19 illustrated in Fig. 1.

The burial environment classification map creation program 31 (see Fig. 6) causes the processor 12 (see Fig. 1) to execute the burial environment classification map creation method according to the present embodiment. The map creation unit 100 (see Fig. 2) is implemented by causing the processor 12 to execute the burial environment classification map creation program 31.

The buried pipe deterioration degree prediction program 32 (see Fig. 6) causes the processor 12 (see Fig. 1) to execute the buried pipe deterioration degree prediction method according to the present embodiment. The buried pipe deterioration degree prediction unit 130 (see Fig. 2) is implemented by causing the processor 12 to execute the buried pipe deterioration degree prediction program 32.

The correspondence table creation program 33 (see Fig. 6) causes the processor 12 (see Fig. 1) to execute the correspondence table creation method according to the present embodiment. The correspondence table creation unit 90 (see Fig. 2) is implemented by causing the processor 12 to execute the correspondence table creation program 33.

The computer-readable recording medium (non-transitory computer-readable recording medium, for example, the storage medium 18) according to the present embodiment may be recorded with programs such as the burial environment classification map creation program 31, the buried pipe deterioration degree prediction program 32, and the correspondence table creation program 33.

(Modification)

With reference to Fig. 41, according to a modification of the present embodiment, the functions of the buried pipe deterioration degree prediction apparatus 1 according to the present embodiment may be implemented by a buried pipe deterioration degree prediction system 7. The buried pipe deterioration degree prediction system 7 includes a buried pipe deterioration degree prediction apparatus 1b, a burial environment classification map creation apparatus 2, a correspondence table creation apparatus 3, a buried pipe data reception device 4, and a storage device 5. The buried pipe deterioration degree prediction apparatus 1b, the burial environment classification map creation apparatus 2, the correspondence table creation apparatus 3, the buried pipe data reception device 4, and the storage device 5 are communicably connected to each other through a communication network 6 such as the Internet or an intranet. The hardware configuration of each of the buried pipe deterioration degree prediction apparatus 1b, the burial environment classification map creation apparatus 2, the correspondence table creation apparatus 3, and the buried pipe data reception device 4 is the same as the hardware configuration illustrated in Fig. 1. The storage device 5 includes, for example, a hard disk or a storage medium drive 17.

The correspondence table creation apparatus 3 has the functions of the correspondence table creation unit 90 (see Fig. 2). The correspondence table creation apparatus 3 creates a correspondence table 46. The buried pipe data reception device 4 has the functions of the buried pipe data reception unit 99. The buried pipe data reception device 4 receives buried pipe data 50 from a client. The storage device 5 has the functions of the storage unit 20.

The burial environment classification map creation apparatus 2 has the functions of the map creation unit 100 (see Fig. 2). The burial environment classification map creation apparatus 2 includes a first map creation unit 101 and a second map creation unit 102.

The buried pipe deterioration degree prediction apparatus 1b has the functions of the buried pipe deterioration degree prediction unit 130. Specifically, the buried pipe deterioration degree prediction apparatus 1b includes a data preprocessing unit 131, a buried pipe deterioration degree calculation unit 132, a buried pipe deterioration degree prediction result creation unit 133, and a buried pipe deterioration degree prediction result output unit 134.

In the present embodiment and the modification thereof, the number of the burial environment classifications is set to four burial environments A to D, but the number of the burial environment classifications is not limited to four.

The effects of the burial environment classification map creation apparatus 2, the buried pipe deterioration degree predicting device 1, the burial environment classification map creation method, the buried pipe deterioration degree predicting method, and the program according to the present embodiment will be described.

The burial environment classification map creation apparatus 2 according to the present embodiment includes a first map creation unit 101 and a second map creation unit 102. The first map creation unit 101 creates, based on a pipeline map 51 which is a map of buried pipes and a generally available geological map 42, a general burial environment classification map 56a for a region corresponding to the pipeline map 51. The second map creation unit 102 includes a ground selection unit 103 and an optimized burial environment classification map creation unit 110. The ground selection unit 103 selects a part of grounds from the general burial environment classification map 56a based on the water leakage accident data 53 which is a past record of water leakage accidents for each of the buried pipes. The optimized burial environment classification map creation unit 110 creates an optimized burial environment classification map (optimized burial environment classification map 58a) for the region corresponding to the pipeline map 51 by optimizing the burial environment classification of the part of grounds by machine learning.

Therefore, it is possible to provide an optimized burial environment classification map (optimized burial environment classification map 58a) that enables more accurate prediction of the deterioration degree for each buried pipe.

In the burial environment classification map creation apparatus 2 of the present embodiment, the second map creation unit 102 includes an optimized burial environment classification map output unit (optimized integrated map output unit 118) that outputs an optimized burial environment classification map (optimized burial environment classification map 58a).

Therefore, it is possible to provide a burial environment classification map (optimized burial environment classification map 58a) to a client, which enables the client to plan a schedule for renewing buried pipes.

In the burial environment classification map creation apparatus 2 according to the present embodiment, a part of the grounds includes a first ground which is assigned a burial environment classification indicating a relatively high corrosivity in the general burial environment classification map 56a and is recorded with no water leakage accident in the water leakage accident data 53.

Therefore, it is possible to provide an optimized burial environment classification map (optimized burial environment classification map 58a) that enables more accurate prediction of the deterioration degree for each buried pipe.

In the burial environment classification map creation apparatus 2 according to the present embodiment, a part of the ground includes a second ground which is assigned a burial environment classification indicating a relatively low corrosivity in the general burial environment classification map 56a and is recorded with a water leakage accident in the water leakage accident data 53.

Therefore, it is possible to provide an optimized burial environment classification map (optimized burial environment classification map 58a) that enables more accurate prediction of the deterioration degree for each buried pipe.

The buried pipe deterioration degree prediction apparatus 1, 1b according to the present embodiment includes a buried pipe deterioration degree calculation unit 132. The buried pipe deterioration degree calculation unit 132 calculates a deterioration degree (for example, an estimated probability of water leakage accidents) for each of the buried pipes based on the burial environment of each of the buried pipes identified by the optimized burial environment classification map (optimized burial environment classification map 58a) optimized for a region corresponding to the pipeline map 51 which is a map of buried pipes, the first information (for example, the installation year of the buried pipe) relating to the burial period of each of the buried pipes, the second information (for example, the nominal diameter, the type of joint and the type of pipe wall thickness of each of the buried pipes) relating to the pipe wall thickness of each of the buried pipes, and the buried pipe deterioration degree prediction model (for example, the probability-of-water-leakage-accidents prediction model 28). The optimized burial environment classification map is created by optimizing a burial environment classification of a part of grounds of the general burial environment classification map 56a for the region corresponding to the pipeline map 51 by machine learning. The general burial environment classification map 56a is created based on the pipeline map 51 and the generally available geological map 42. The part of the ground is selected from the general burial environment classification map 56a based on the water leakage accident data 53 which is a past record of water leakage accidents for each of the buried pipes.

Therefore, it is possible to predict the deterioration degree for each of the buried pipes based on the optimized burial environment classification map (optimized burial environment classification map 58a) optimized for the region corresponding to the pipeline map 51.

The buried pipe deterioration degree prediction apparatus 1, 1b according to the present embodiment further includes a buried pipe deterioration degree prediction result output unit 134 that outputs a buried pipe deterioration degree prediction map 67 that is a map indicating a deterioration degree (for example, an estimated probability of water leakage accidents) for each of the buried pipes.

Therefore, it is possible to provide a burial environment classification map (optimized burial environment classification map 58a) to a client, which enables the client to plan a schedule for renewing buried pipes.

In the buried pipe deterioration degree prediction apparatus 1, 1b according to the present embodiment, a part of the grounds includes a first ground which is assigned a burial environment classification indicating a relatively high corrosivity in the general burial environment classification map 56a and is recorded with no water leakage accident in the water leakage accident data 53.

Therefore, it is possible to predict the deterioration degree for each buried pipe more accurately based on the optimized burial environment classification map (optimized burial environment classification map 58a) optimized for the region corresponding to the pipeline map 51.

In the buried pipe deterioration degree prediction apparatus 1, 1b according to the present embodiment, a part of the ground includes a second ground which is assigned a burial environment classification indicating a relatively low corrosivity in the general burial environment classification map 56a and is recorded with a water leakage accident in the water leakage accident data 53.

Therefore, it is possible to predict the deterioration degree for each buried pipe more accurately based on the optimized burial environment classification map (optimized burial environment classification map 58a) optimized for the region corresponding to the pipeline map 51.

In the buried pipe deterioration degree prediction apparatus 1, 1b according to the present embodiment, the deterioration degree for each of the buried pipes refers to a probability (estimated probability of water leakage accidents) that a water leakage accident occurs in each buried pipe per unit time and unit distance.

Therefore, it is possible to predict the deterioration degree for each buried pipe more accurately based on the optimized burial environment classification map (optimized burial environment classification map 58a) optimized for the region corresponding to the pipeline map 51.

The burial environment classification map creation method according to the present embodiment includes: a step of creating, based on the pipeline map 51 which is a map of buried pipes and a generally available geological map 42, a general burial environment classification map 56a for a region corresponding to the pipeline map 51 (step S12); a step of selecting a part of grounds from the general burial environment classification map 56a based on the water leakage accident data 53 which is a past record of water leakage accidents for each of the buried pipes; and a step of creating an optimized burial environment classification map (optimized burial environment classification map 58a) optimized for a region corresponding to the pipeline map 51 by optimizing the burial environment classification of the part of grounds by machine learning (step S21).

Therefore, it is possible to provide an optimized burial environment classification map (optimized burial environment classification map 58a) that enables more accurate prediction of the deterioration degree for each buried pipe.

The burial environment classification map creation method according to the present embodiment further includes a step of outputting the optimized burial environment classification map (optimized burial environment classification map 58a) (step S23).

Therefore, it is possible to provide a burial environment classification map (optimized burial environment classification map 58a) to a client, which enables the client to plan a renewal schedule for the buried pipe.

In the burial environment classification map creation method according to the present embodiment, a part of the grounds includes a first ground which is assigned a burial environment classification indicating a relatively high corrosivity in the general burial environment classification map 56a and is recorded with no water leakage accident in the water leakage accident data 53.

Therefore, it is possible to provide an optimized burial environment classification map (optimized burial environment classification map 58a) that enables more accurate prediction of the deterioration degree for each buried pipe.

In the burial environment classification map creation method according to the present embodiment, a part of the ground includes a second ground which is assigned a burial environment classification indicating a relatively low corrosivity in the general burial environment classification map 56a and is recorded with a water leakage accident in the water leakage accident data 53.

Therefore, it is possible to provide an optimized burial environment classification map (optimized burial environment classification map 58a) that enables more accurate prediction of the deterioration degree for each buried pipe.

The buried pipe deterioration degree prediction method according to the present embodiment includes a step (step S70) of calculating a deterioration degree (for example, an estimated probability of water leakage accidents) for each of the buried pipes based on the burial environment of each of the buried pipes identified by the optimized burial environment classification map (optimized burial environment classification map 58a) optimized for a region corresponding to the pipeline map 51 which is a map of buried pipes, the first information (for example, the installation year of the buried pipe) relating to the burial period of each of the buried pipes, the second information (for example, the nominal diameter, the type of joint and the type of pipe wall thickness of each of the buried pipes) relating to the pipe wall thickness of each of the buried pipes, and the buried pipe deterioration degree prediction model (for example, the probability-of-water-leakage-accidents prediction model 28). The optimized burial environment classification map is created by optimizing a burial environment classification of a part of grounds in the general burial environment classification map 56a by machine learning. The general burial environment classification map 56a is created based on the pipeline map 51 and the generally available geological map 42. The part of the ground is selected from the general burial environment classification map 56a based on the water leakage accident data 53 which is a past record of water leakage accidents for each of the buried pipes.

Therefore, it is possible to predict the deterioration degree for each buried pipe more accurately based on the optimized burial environment classification map (optimized burial environment classification map 58a) optimized for the region corresponding to the pipeline map 51.

The buried pipe deterioration degree prediction method according to the present embodiment further includes a step of outputting a buried pipe deterioration degree prediction map 67 which is a map indicating a deterioration degree (for example, an estimated probability of water leakage accidents) for each of the buried pipes (step S81).

Therefore, it is possible to provide a burial environment classification map (optimized burial environment classification map 58a) to a client, which enables the client to plan a schedule for renewing buried pipes.

In the buried pipe deterioration degree prediction method according to the present embodiment, a part of the grounds includes a first ground which is assigned a burial environment classification indicating a relatively high corrosivity in the general burial environment classification map 56a and is recorded with no water leakage accident in the water leakage accident data 53.

Therefore, it is possible to predict the deterioration degree for each buried pipe more accurately based on the optimized burial environment classification map (optimized burial environment classification map 58a) optimized for the region corresponding to the pipeline map 51.

In the buried pipe deterioration degree prediction method according to the present embodiment, a part of the ground includes a second ground which is assigned a burial environment classification indicating a relatively low corrosivity in the general burial environment classification map 56a and is recorded with a water leakage accident in the water leakage accident data 53.

Therefore, it is possible to predict the deterioration degree for each buried pipe more accurately based on the optimized burial environment classification map (optimized burial environment classification map 58a) optimized for the region corresponding to the pipeline map 51.

In the buried pipe deterioration degree prediction method according to the present embodiment, the deterioration degree for each of the buried pipes refers to a probability (estimated probability of water leakage accidents) that a water leakage accident occurs in each buried pipe per unit time and unit distance.

Therefore, it is possible to predict the deterioration degree for each buried pipe more accurately based on the optimized burial environment classification map (optimized burial environment classification map 58a) optimized for the region corresponding to the pipeline map 51.

The program (burial environment classification map creation program 31) according to the present embodiment causes the processor 12 to execute each step of the burial environment classification map creation method according to the present embodiment.

Therefore, it is possible to provide an optimized burial environment classification map (optimized burial environment classification map 58a) that enables more accurate prediction of the deterioration degree for each buried pipe.

The program (for example, the buried pipe deterioration degree prediction program 32) according to the present embodiment causes the processor 12 to execute each step of the buried pipe deterioration degree prediction method according to the present embodiment.

Therefore, it is possible to predict the deterioration degree for a buried pipe more accurately based on the burial environment classification map (optimized burial environment classification map 58a) optimized for the region corresponding to the pipeline map 51.

Hereinafter, the present disclosure will be summarized as the following aspects.

(Aspect 1)

A burial environment classification map creation apparatus comprising:

a first map creation unit that creates, based on a pipeline map which is a map of buried pipes and a generally available geological map, a general burial environment classification map for a region corresponding to the pipeline map; and
a second map creation unit that includes a ground selection unit and an optimized burial environment classification map creation unit, wherein
the ground selection unit selects a part of grounds from the general burial environment classification map based on leakage accident data which is a past record of water leakage accidents for each of the buried pipes, and
the optimized burial environment classification map creation unit creates an optimized burial environment classification map for the region by optimizing a burial environment classification of the part of grounds by machine learning.

(Aspect 2)

The burial environment classification map creation apparatus according to aspect 1, wherein
the second map creation unit includes an optimized burial environment classification map output unit that outputs the optimized burial environment classification map.

(Aspect 3)

The burial environment classification map creation apparatus according to aspect 1 or aspect 2, wherein
the part of grounds includes a first ground which is assigned a burial environment classification indicating a relatively high corrosivity in the general burial environment classification map and is recorded with no water leakage accident in the water leakage accident data.

(Aspect 4)

The burial environment classification map creation apparatus according to any one of aspect 1 to aspect 3, wherein
the part of grounds includes a second ground which is assigned a burial environment classification indicating a relatively low corrosivity in the general burial environment classification map and is recorded with a water leakage accident in the water leakage accident data.

(Aspect 5)

A buried pipe deterioration degree prediction apparatus comprising:

a buried pipe deterioration degree calculation unit that calculates a deterioration degree for each of buried pipes based on a burial environment of each of the buried pipes identified by an optimized burial environment classification map optimized for a region corresponding to a pipeline map which is a map of the buried pipes, first information related to a burial period of each of the buried pipes, second information related to a pipe wall thickness of each of the buried pipes, and a buried pipe deterioration degree prediction model, wherein
the optimized burial environment classification map is created by optimizing a burial environment classification of a part of grounds in a general burial environment classification map for the region by machine learning,
the general burial environment classification map is created based on the pipeline map and a generally available geological map, and
the part of grounds is selected from the general burial environment classification map based on water leakage accident data which is a past record of water leakage accidents for each of the buried pipes.

(Aspect 6)

The buried pipe deterioration degree prediction apparatus according to aspect 5, further comprising:
a buried pipe deterioration degree prediction result output unit that outputs a buried pipe deterioration degree prediction map which is a map indicating the deterioration degree for each of the buried pipes.

(Aspect 7)

The buried pipe deterioration degree prediction apparatus according to aspect 5 or aspect 6, wherein
the part of grounds includes a first ground which is assigned a burial environment classification indicating a relatively high corrosivity in the general burial environment classification map and is recorded with no water leakage accident in the water leakage accident data.

(Aspect 8)

The buried pipe deterioration degree prediction apparatus according to any one of aspect 5 to aspect 7,
the part of grounds includes a second ground which is assigned a burial environment classification indicating a relatively low corrosivity in the general burial environment classification map and is recorded with a water leakage accident in the water leakage accident data.

(Aspect 9)

The buried pipe deterioration degree prediction apparatus according to any one of aspect 5 to aspect 8, wherein
the deterioration degree for each of the buried pipes represents a probability that a water leakage accident occurs in each of the buried pipes per unit time and per unit distance.

(Aspect 10)

A burial environment classification map creation method comprising:

a step of creating, based on a pipeline map which is a map of buried pipes and a generally available geological map, a general burial environment classification map for a region corresponding to the pipeline map;
a step of selecting a part of grounds from the general burial environment classification map based on water leakage accident data which is a past record of water leakage accidents for each of the buried pipes; and
a step of creating an optimized burial environment classification map for the region by optimizing a burial environment classification of the part of grounds by machine learning.

(Aspect 11)

The burial environment classification map creation method according to aspect 10, further comprising:
a step of outputting the optimized burial environment classification map.

(Aspect 12)

The burial environment classification map creation method according to aspect 10 or aspect 11, wherein the part of grounds includes a first ground which is assigned a burial environment classification indicating a relatively high corrosivity in the general burial environment classification map and is recorded with no water leakage accident in the water leakage accident data.

(Aspect 13)

The burial environment classification map creation method according to any one of aspect 10 to aspect 12, wherein
the part of grounds includes a second ground which is assigned a burial environment classification indicating a relatively low corrosivity in the general burial environment classification map and is recorded with a water leakage accident in the water leakage accident data.

(Aspect 14)

A Buried pipe deterioration degree prediction method comprising:

a step of calculating a deterioration degree for each of buried pipes based on a burial environment of each of the buried pipes identified by an optimized burial environment classification map optimized for a region corresponding to a pipeline map which is a map of the buried pipes, first information related to a burial period of each of the buried pipes, second information related to a pipe wall thickness of each of the buried pipes, and a buried pipe deterioration degree prediction model, wherein
the optimized burial environment classification map is created by optimizing a burial environment classification of a part of grounds in a general burial environment classification map for the region by machine learning,
the general burial environment classification map is created based on the pipeline map and a generally available geological map, and
the part of grounds is selected from the general burial environment classification map based on water leakage accident data which is a past record of water leakage accidents for each of the buried pipes.

(Aspect 15)

The buried pipe deterioration degree prediction method according to aspect 14, further comprising:
a step of outputting a buried pipe deterioration degree prediction map which is a map indicating the deterioration degree for each of the buried pipes.

(Aspect 16)

The buried pipe deterioration degree prediction method according to aspect 14 or aspect 15, wherein
the part of grounds includes a first ground which is assigned a burial environment classification indicating a relatively high corrosivity in the general burial environment classification map and is recorded with no water leakage accident in the water leakage accident data.

(Aspect 17)

The buried pipe deterioration degree prediction method according to any one of aspect 14 to aspect 16, wherein
the part of grounds includes a second ground which is assigned a burial environment classification indicating a relatively low corrosivity in the general burial environment classification map and is recorded with a water leakage accident in the water leakage accident data.

(Aspect 18)

The buried pipe deterioration degree prediction method according to any one of aspect 14 to aspect 17, wherein
the deterioration degree for each of the buried pipes represents a probability that a water leakage accident occurs in each of the buried pipes per unit time and per unit distance.

(Aspect 19)

A program that causes a processor to execute each step of the burial environment classification map creation method according to any one of aspect 10 to aspect 13.

(Aspect 20)

A program that causes a processor to execute each step of the buried pipe deterioration degree prediction method according to aspect 14 or aspect 18.
It should be understood that the embodiments disclosed herein are illustrative and non-restrictive in all respects. The scope of the present invention is defined by the terms of the claims rather than the description of the embodiments above, and is intended to include any modifications within the scope and meaning equivalent to the terms of the claims.

REFERENCE SIGNS LIST

1, 1b: buried pipe deterioration degree prediction apparatus; 2: burial environment classification map creation apparatus; 3: correspondence table creation apparatus; 4: buried pipe data reception device; 5: storage device; 6: communication network; 7: buried pipe deterioration degree prediction system; 11: input device; 12: processor; 13: memory; 14: display; 16: network controller; 17: storage medium drive; 18: storage medium; 19: storage; 20: storage unit; 21: survey pipe data storage unit; 22: geological map database unit; 23: correspondence table storage unit; 24: buried pipe data storage unit; 25: map storage unit; 26: nominal pipe wall thickness database unit; 27: probability-of-water-leakage-accidents prediction model storage unit; 28: probability-of-water-leakage-accidents prediction model; 29: buried pipe deterioration degree prediction result storage unit; 30: program storage unit; 31: burial environment classification map creation program; 32: buried pipe deterioration degree prediction program; 33: correspondence table creation program; 40: survey pipe data; 42: geological map; 43: subsurface geological map; 44: topography classification map; 46: correspondence table between geological information, ground IDs, corrosion rates and burial environments; 50: buried pipe data; 51: pipeline map; 52: buried pipe attribute data; 53: water leakage accident data; 54: water leakage accident map; 55: water leakage accident data collection period; 56: general integrated map; 56a: general burial environment classification map; 56b: ground ID map; 58: optimized integrated map; 58a: optimized burial environment classification map; 60: nominal pipe wall thickness data; 65: buried pipe deterioration degree prediction result; 66: buried pipe deterioration degree prediction table; 67: buried pipe deterioration degree prediction map; 70: first preprocessed buried pipe data; 74: second preprocessed buried pipe data; 76: estimated probability-of-water-leakage-accidents result; 78: third preprocessed buried pipe data; 90: correspondence table creation unit; 91: corrosion rate calculation unit; 92: geological information acquisition unit; 93: ground ID assignment unit; 94: representative corrosion rate calculation unit; 95: burial environment classification unit; 96: correspondence table generation unit; 97: correspondence table output unit; 99: buried pipe data reception unit; 100: map creation unit; 101: first map creation unit; 102: second map creation unit; 103: ground selection unit; 104, 121, 131: data preprocessing unit; 105: estimated number of water leakage accidents calculation unit; 106: actual number of water leakage accidents calculation unit; 107, 113: determination unit; 110: optimized burial environment classification map creation unit; 111: initial population generation unit; 112: fitness calculation unit; 114: new generation population generation unit; 116: optimized integrated map creation unit; 118: optimized integrated map output unit; 120: modified integrated map creation unit; 122: estimated probability-of-water-leakage-accidents calculation unit; 123: estimated probability-of-water-leakage-accidents result creation unit; 124: number of water leakage accidents calculation unit; 125: pipe renewal rate calculation unit; 130: buried pipe deterioration degree prediction unit; 132: buried pipe deterioration degree calculation unit; 133: buried pipe deterioration degree prediction result creation unit; 134: buried pipe deterioration degree prediction result output unit.

**Claims**

1. A burial environment classification map creation apparatus comprising:

a first map creation unit that creates, based on a pipeline map which is a map of buried pipes and a generally available geological map, a general burial environment classification map for a region corresponding to the pipeline map; and

a second map creation unit that includes a ground selection unit and an optimized burial environment classification map creation unit, wherein

the ground selection unit selects a part of grounds from the general burial environment classification map based on leakage accident data which is a past record of water leakage accidents for each of the buried pipes, and

the optimized burial environment classification map creation unit creates an optimized burial environment classification map for the region by optimizing a burial environment classification of the part of grounds by machine learning.

2. The burial environment classification map creation apparatus according to claim 1, wherein
the second map creation unit includes an optimized burial environment classification map output unit that outputs the optimized burial environment classification map.

3. The burial environment classification map creation apparatus according to claim 1 or claim 2, wherein
the part of grounds includes a first ground which is assigned a burial environment classification indicating a relatively high corrosivity in the general burial environment classification map and is recorded with no water leakage accident in the water leakage accident data.

4. The burial environment classification map creation apparatus according to claim 1 or claim 2, wherein
the part of grounds includes a second ground which is assigned a burial environment classification indicating a relatively low corrosivity in the general burial environment classification map and is recorded with a water leakage accident in the water leakage accident data.

5. A buried pipe deterioration degree prediction apparatus comprising:

a buried pipe deterioration degree calculation unit that calculates a deterioration degree for each of buried pipes based on a burial environment of each of the buried pipes identified by an optimized burial environment classification map optimized for a region corresponding to a pipeline map which is a map of the buried pipes, first information related to a burial period of each of the buried pipes, second information related to a pipe wall thickness of each of the buried pipes, and a buried pipe deterioration degree prediction model, wherein the optimized burial environment classification map is created by optimizing a burial environment classification of a part of grounds in a general burial environment classification map for the region by machine learning, the general burial environment classification map is created based on the pipeline map and a generally available geological map, and the part of grounds is selected from the general burial environment classification map based on water leakage accident data which is a past record of water leakage accidents for each of the buried pipes.

6. The buried pipe deterioration degree prediction apparatus according to claim 5, further comprising: a buried pipe deterioration degree prediction result output unit that outputs a buried pipe deterioration degree prediction map which is a map indicating a deterioration degree for each of the buried pipes.

7. The buried pipe deterioration degree prediction apparatus according to claim 5 or claim 6, wherein the part of grounds includes a first ground which is assigned a burial environment classification indicating a relatively high corrosivity in the general burial environment classification map and is recorded with no water leakage accident in the water leakage accident data.

8. The buried pipe deterioration degree prediction apparatus according to claim 5 or claim 6, the part of grounds includes a second ground which is assigned a burial environment classification indicating a relatively low corrosivity in the general burial environment classification map and is recorded with a water leakage accident in the water leakage accident data.

9. The buried pipe deterioration degree prediction apparatus according to claim 5 or claim 6, wherein the deterioration degree for each of the buried pipes represents a probability that a water leakage accident occurs in each of the buried pipes per unit time and per unit distance.

10. A burial environment classification map creation method comprising:

a step of creating, based on a pipeline map which is a map of buried pipes and a generally available geological map, a general burial environment classification map for a region corresponding to the pipeline map; a step of selecting a part of grounds from the general burial environment classification map based on water leakage accident data which is a past record of water leakage accidents for each of the buried pipes; and a step of creating an optimized burial environment classification map for the region by optimizing a burial environment classification of the part of grounds by machine learning.

11. The burial environment classification map creation method according to claim 10, further comprising: a step of outputting the optimized burial environment classification map.

12. The burial environment classification map creation method according to claim 10 or claim 11, wherein the part of grounds includes a first ground which is assigned a burial environment classification indicating a relatively high corrosivity in the general burial environment classification map and is recorded with no water leakage accident in the water leakage accident data.

13. The burial environment classification map creation method according to claim 10 or claim 11, wherein the part of grounds includes a second ground which is assigned a burial environment classification indicating a relatively low corrosivity in the general burial environment classification map and is recorded with a water leakage accident in the water leakage accident data.

14. A Buried pipe deterioration degree prediction method comprising:

a step of calculating a deterioration degree for each of buried pipes based on a burial environment of each of the buried pipes identified by an optimized burial environment classification map optimized for a region corresponding to a pipeline map which is a map of the buried pipes, first information related to a burial period of each of the buried pipes, second information related to a pipe wall thickness of each of the buried pipes, and a buried pipe deterioration degree prediction model, wherein the optimized burial environment classification map is created by optimizing a burial environment classification of a part of grounds in a general burial environment classification map for the region by machine learning, the general burial environment classification map is created based on the pipeline map and a generally available geological map, and the part of grounds is selected from the general burial environment classification map based on water leakage accident data which is a past record of water leakage accidents for each of the buried pipes.

**15.** The buried pipe deterioration degree prediction method according to claim 14, further comprising: a step of outputting a buried pipe deterioration degree prediction map which is a map indicating the deterioration degree for each of the buried pipes.

**16.** The buried pipe deterioration degree prediction method according to claim 14 or claim 15, wherein the part of grounds includes a first ground which is assigned a burial environment classification indicating a relatively high corrosivity in the general burial environment classification map and is recorded with no water leakage accident in the water leakage accident data.

**17.** The buried pipe deterioration degree prediction method according to claim 14 or claim 15, wherein the part of grounds includes a second ground which is assigned a burial environment classification indicating a relatively low corrosivity in the general burial environment classification map and is recorded with a water leakage accident in the water leakage accident data.

**18.** The buried pipe deterioration degree prediction method according to claim 14 or claim 15, wherein the deterioration degree for each of the buried pipes represents a probability that a water leakage accident occurs in each of the buried pipes per unit time and per unit distance.

**19.** A program that causes a processor to execute each step of the burial environment classification map creation method according to claim 10 or claim 11.

**20.** A program that causes a processor to execute each step of the buried pipe deterioration degree prediction method according to claim 14 or claim 15.

FIG.1

1, 2, 3

18

11 INPUT DEVICE

12 PROCESSOR

13 MEMORY

14 DISPLAY

17 STORAGE MEDIUM DRIVE

16 NETWORK CONTROLLER

19 STORAGE

## FIG.2

1, 2, 3

| 20 |
| --- |
| STORAGE UNIT |

| 90 |
| --- |
| CORRESPONDENCE TABLE CREATION UNIT |

| 99 |
| --- |
| BURIED PIPE DATA RECEPTION UNIT |

| 100 MAP CREATION UNIT |
| --- |
| 101 FIRST MAP CREATION UNIT |
| 102 SECOND MAP CREATION UNIT |

| 130 BURIED PIPE DETERIORATION DEGREE PREDICTION UNIT |
| --- |
| 131 DATA PREPROCESSING UNIT |
| 132 BURIED PIPE DETERIORATION DEGREE CALCULATION UNIT |
| 133 BURIED PIPE DETERIORATION DEGREE PREDICTION RESULT CREATION UNIT |
| 134 BURIED PIPE DETERIORATION DEGREE PREDICTION RESULT OUTPUT UNIT |

## FIG.3

| 90 CORRESPONDENCE TABLE CREATION UNIT | |
| --- | --- |
| 91 CORROSION RATE CALCULATION UNIT | 92 GEOLOGICAL INFORMATION ACQUISITION UNIT |
| 93 GROUND ID ASSIGNMENT UNIT | 94 REPRESENTATIVE CORROSION RATE CALCULATION UNIT |
| 95 BURIAL ENVIRONMENT CLASSIFICATION UNIT | 96 CORRESPONDENCE TABLE GENERATION UNIT |
| 97 CORRESPONDENCE TABLE OUTPUT UNIT | |

29

FIG.4

SECOND MAP CREATION UNIT ⌐102

GROUND SELECTION UNIT ⌐103

DATA PREPROCESSING UNIT ⌐104

ESTIMATED NUMBER OF WATER LEAKAGE ACCIDENTS CALCULATION UNIT ⌐105

ACTUAL NUMBER OF WATER LEAKAGE ACCIDENTS CALCULATION UNIT ⌐106

DETERMINATION UNIT ⌐107

OPTIMIZED BURIAL ENVIRONMENT CLASSIFICATION MAP CREATION UNIT ⌐110

INITIAL POPULATION GENERATION UNIT ⌐111

FITNESS CALCULATION UNIT ⌐112

DETERMINATION UNIT ⌐113

NEW GENERATION POPULATION GENERATION UNIT ⌐114

OPTIMIZED INTEGRATED MAP CREATION UNIT ⌐116

OPTIMIZED INTEGRATED MAP OUTPUT UNIT ⌐118

FIG.5

FITNESS CALCULATION UNIT ⌐112

MODIFIED INTEGRATED MAP CREATION UNIT ⌐120

DATA PREPROCESSING UNIT ⌐121

ESTIMATED PROBABILITY-OF-WATER-LEAKAGE-ACCIDENTS CALCULATION UNIT ⌐122

ESTIMATED PROBABILITY-OF-WATER-LEAKAGE-ACCIDENTS RESULT CREATION UNIT ⌐123

REMAINING NUMBER OF WATER LEAKAGE ACCIDENTS CALCULATION UNIT ⌐124

PIPE RENEWAL RATE CALCULATION UNIT ⌐125

FIG.6

STORAGE UNIT — 20

| | |
|---|---|
| SURVEY PIPE DATA STORAGE UNIT — 21 | GEOLOGICAL MAP DATABASE UNIT — 22 |
| CORRESPONDENCE TABLE STORAGE UNIT — 23 | BURIED PIPE DATA STORAGE UNIT — 24 |
| MAP STORAGE UNIT — 25 | NOMINAL PIPE WALL THICKNESS DATABASE UNIT — 26 |

PROBABILITY-OF-WATER-LEAKAGE-ACCIDENTS PREDICTION MODEL STORAGE UNIT — 27

PROBABILITY-OF-WATER-LEAKAGE-ACCIDENTS PREDICTION MODEL — 28

⋮

PROBABILITY-OF-WATER-LEAKAGE-ACCIDENTS PREDICTION MODEL — 28

BURIED PIPE DETERIORATION DEGREE PREDICTION RESULT STORAGE UNIT — 29

PROGRAM STORAGE UNIT — 30

BURIAL ENVIRONMENT CLASSIFICATION MAP CREATION PROGRAM — 31

BURIED PIPE DETERIORATION DEGREE PREDICTION PROGRAM — 32

CORRESPONDENCE TABLE CREATION PROGRAM — 33

FIG.7

| SURVEY NUMBER | ADDRESS | TYPE OF SOIL | SOIL RESISTIVITY (Ω・cm) | CORROSION DEPTH (mm) | INSTALLATION YEAR | SURVEY YEAR |
|---|---|---|---|---|---|---|
| 0001 | ・・・ | ・・・ | ・・・ | ・・・ | ・・・ | ・・・ |
| 0002 | ・・・ | ・・・ | ・・・ | ・・・ | ・・・ | ・・・ |

40

FIG.8

42

GEOLOGICAL MAP

43

SUBSURFACE GEOLOGICAL MAP (LARGE CLASSIFICATION, SMALL CLASSIFICATION)

44

TOPOGRAPHY CLASSIFICATION MAP (LARGE CLASSIFICATION, SMALL CLASSIFICATION)

**FIG.9**

| GEOLOGICAL INFORMATION | | | | GROUND ID | REPRESENTATIVE CORROSION RATE (mm/year) | BURIAL ENVIRONMENT |
|---|---|---|---|---|---|---|
| TOPOGRAPHY | | GROUND SURFACE GEOLOGICAL FEATURES | | | | |
| LARGE CLASSIFICATION | SMALL CLASSIFICATION | LARGE CLASSIFICATION | SMALL CLASSIFICATION | | | |
| LOAM PLATEAU | VOLCANIC ASH PLATEAU | CONSOLIDATED | PEBBLE, ALTERNATING SHALE LAYER | 001 | ... | A |
| LOW LAND | DRAINED LAND | UNCONSOLIDATED | SAND | 002 | ... | |
| ⋮ | ⋮ | ⋮ | ⋮ | ⋮ | ⋮ | |
| LOW LAND | NATURAL LEVEE, SANDBAR, SAND HILL | UNCONSOLIDATED | SAND (DUNE SAND) | 101 | ... | B |
| TERRACE PLATEAU | GRAVEL PLATEAU (UPPER LEVEL) | UNCONSOLIDATED | GRAVEL, SAND, MUD | 102 | ... | |
| ⋮ | ⋮ | ⋮ | ⋮ | ⋮ | ⋮ | |
| HILLY TERRAIN | SMALL UNDULATING HILLY TERRAIN | PLUTONIC ROCK | GRANITIC ROCK | 201 | ... | C |
| LOW LAND | FAN-LIKE GEOLOGICAL LOW LAND | UNCONSOLIDATED | SAND | 202 | ... | |
| ⋮ | ⋮ | ⋮ | ⋮ | ⋮ | ⋮ | |
| MOUNTAIN LAND | PIEDMONT | UNCONSOLIDATED | GRAVEL SEDIMENT | 301 | ... | D |
| HILLY TERRAIN | VOLCANIC HILLY TERRAIN | VOLCANIC | TUFFACEOUS BRECCIA | 302 | ... | |
| ⋮ | ⋮ | ⋮ | ⋮ | ⋮ | ⋮ | |

## FIG.10

CORROSION
RATE
(mm/year)

0.6

0.4

0.2

0.0

MEDIAN

A  B  C  D

BURIAL ENVIRONMENT

## FIG.11

50(51)

PIPELINE ID:AA01
PIPELINE ID:AA02
PIPELINE ID:AA03

## FIG.12

50(52)

| PIPELINE ID | INSTALLATION YEAR | NOMINAL DIAMETER | TYPE OF JOINT | TYPE OF PIPE WALL THICKNESS | PIPELINE LENGTH (km) |
|---|---|---|---|---|---|
| ・・・ | 1987 | 100 | K | 3 | ・・・ |
| ・・・ | 2000 | 150 | NS | 1 | ・・・ |

FIG.13

PIPELINE ID:AA01
PIPELINE ID:AA02
PIPELINE ID:AA03

✖ LOCATION OF LEAKAGE ACCIDENT

BEGINNING OF WATER LEAKAGE ACCIDENT DATA COLLECTION PERIOD: OCTOBER 2017

END OF WATER LEAKAGE ACCIDENT DATA COLLECTION PERIOD: OCTOBER 2022

FIG.14

GROUND ID:001   GROUND ID:002   GROUND ID:101   GROUND ID:102

PIPELINE ID:AA01
PIPELINE ID:AA02
PIPELINE ID:AA03

BURIAL ENVIRONMENT

A
B
C
D

GROUND ID:201   GROUND ID:202   GROUND ID:301   GROUND ID:302

## FIG.15

GROUND
ID:001　　GROUND
ID:002　　GROUND
ID:101　　GROUND
ID:102

58
(58a, 56b)

— PIPELINE ID:AA01
— PIPELINE ID:AA02
— PIPELINE ID:AA03

BURIAL ENVIRONMENT

| | |
|---|---|
| ▨ | A |
| ▨ | B |
| ▨ | C |
| ▨ | D |

GROUND
ID:201　　GROUND
ID:202　　GROUND
ID:301　　GROUND
ID:302

## FIG.16

60

| INSTALLATION YEAR | NOMINAL DIAMETER | TYPE OF JOINT | TYPE OF PIPE WALL THICKNESS | NOMINAL PIPE WALL THICKNESS (mm) |
|---|---|---|---|---|
| 1987 | 100 | K | 3 | ... |
| 2000 | 150 | NS | 1 | ... |
| | | | | |

FIG.17

NOMINAL PIPE WALL
THICKNESS 7.5mm

—··—  BURIAL ENVIRONMENT A
------  BURIAL ENVIRONMENT B
—·—  BURIAL ENVIRONMENT C
———  BURIAL ENVIRONMENT D

PROBABILITY OF WATER LEAKAGE ACCIDENTS (case/year/km)

$R_m$

(INSTALLATION YEAR)

$T_m$

BURIAL PERIOD (years)

FIG.18

65(66)

| PIPELINE ID | CURRENT YEAR | ESTIMATED PROBABILITY OF WATER LEAKAGE ACCIDENTS $R_3$ (case/year/km) | FUTURE YEAR | ESTIMATED PROBABILITY OF WATER LEAKAGE ACCIDENTS $R_4$ (case/year/km) |
|---|---|---|---|---|
| ・・・ | 2022 | ・・・ | 2027 | ・・・ |
| ・・・ | 2022 | ・・・ | 2027 | ・・・ |

FIG.19

PIPELINE ID:AA01
PIPELINE ID:AA02
PIPELINE ID:AA03

YEAR 2022 (CURRENT YEAR)

ESTIMATED PROBABILITY
OF WATER LEAKAGE
ACCIDENTS

━━━ ≥0.5 case/year/km

━━ ≥0.1 case/year/km

─── ≥0.05 case/year/km

──── <0.05 case/year/km

FIG.20

```
          START
            │
            ▼
┌──────────────────────────────────────┐  S1
│ CALCULATE CORROSION RATE FOR SURVEY PIPE │
└──────────────────────────────────────┘
            │
            ▼
┌──────────────────────────────────────┐  S2
│ ACQUIRE GEOLOGICAL INFORMATION OF       │
│ SURVEY SITE                             │
└──────────────────────────────────────┘
            │
            ▼
┌──────────────────────────────────────┐  S3
│ ASSIGN GROUND ID TO GEOLOGICAL INFORMATION │
└──────────────────────────────────────┘
            │
            ▼
┌──────────────────────────────────────┐  S4
│ CALCULATE REPRESENTATIVE CORROSION RATE │
│ FOR EACH GROUND ID                      │
└──────────────────────────────────────┘
            │
            ▼
┌──────────────────────────────────────┐  S5
│ CLASSIFY SURVEY PIPE DATA 40 INTO BURIAL │
│ ENVIRONMENTS A-D                        │
└──────────────────────────────────────┘
            │
            ▼
┌──────────────────────────────────────┐  S6
│ GENERATE CORRESPONDENCE TABLE 46        │
└──────────────────────────────────────┘
            │
            ▼
┌──────────────────────────────────────┐  S7
│ OUTPUT CORRESPONDENCE TABLE 46          │
└──────────────────────────────────────┘
            │
            ▼
          END
```

## FIG.21

```
START
```
↓

S11

RECEIVE BURIED PIPE DATA 50 AND WATER LEAKAGE
ACCIDENT DATA 53

↓

S12

CREATE GENERAL INTEGRATED MAP 56

↓

S13

CREATE OPTIMIZED INTEGRATED MAP 58

↓

```
END
```

## FIG.22

S13

S20

SELECT GROUND ID THAT SERVES AS CANDIDATE FOR
OPTIMIZING BURIAL ENVIRONMENT CLASSIFICATION

↓

S21

OPTIMIZE BURIAL ENVIRONMENT CLASSIFICATION OF
GROUND ID SELECTED IN STEP S10 BY MACHINE
LEARNING TO CREATE OPTIMIZED BURIAL ENVIRONMENT
CLASSIFICATION MAP 58a

↓

S22

CREATE OPTIMIZED INTEGRATED MAP 58

↓

S23

OUTPUT OPTIMIZED INTEGRATED MAP 58

## FIG.23

S20

S24

SELECT PROVISIONAL CANDIDATE OF GROUND ID
WHOSE BURIAL ENVIRONMENT CLASSIFICATION
NEEDS TO CHANGE

↓

S25

EXCLUDE GROUND ID WHOSE BURIAL
ENVIRONMENT CLASSIFICATION DOES NOT NEED
TO CHANGE FROM PROVISIONAL CANDIDATES OF
GROUND ID

## FIG.24

S26

CALCULATE ESTIMATED NUMBER OF WATER LEAKAGE ACCIDENTS PER UNIT TIME DURING WATER LEAKAGE ACCIDENT DATA COLLECTION PERIOD 55 FOR EACH SECOND PROVISIONAL CANDIDATE OF GROUND ID

S27

CALCULATE ACTUAL NUMBER OF WATER LEAKAGE ACCIDENTS PER UNIT TIME DURING WATER LEAKAGE ACCIDENT DATA COLLECTION PERIOD 55 FOR EACH SECOND PROVISIONAL CANDIDATE OF GROUND ID

S28

IS DIFFERENCE BETWEEN ESTIMATED NUMBER OF WATER LEAKAGE ACCIDENTS AND ACTUAL NUMBER OF WATER LEAKAGE ACCIDENTS EQUAL TO OR LESS THAN REFERENCE VALUE?    NO

YES    S29

EXCLUDE GROUND ID WHOSE DIFFERENCE IS EQUAL TO OR LESS THAN REFERENCE VALUE FROM SECOND PROVISIONAL CANDIDATES OF GROUND ID

S30

LEAVE GROUND ID WHOSE DIFFERENCE IS GREATER THAN REFERENCE VALUE IN SECOND PROVISIONAL CANDIDATES OF GROUND ID

## FIG.25

S26

S31

CREATE FIRST PREPROCESSED BURIED PIPE DATA 70

S32

CALCULATE ESTIMATED PROBABILITY OF WATER LEAKAGE ACCIDENTS FOR EACH PIPELINE ID INCLUDED IN SECOND PROVISIONAL CANDIDATES OF GROUND ID

S33

CALCULATE ESTIMATED NUMBER OF WATER LEAKAGE ACCIDENTS PER UNIT TIME DURING WATER LEAKAGE ACCIDENT DATA COLLECTION PERIOD 55 FOR EACH SECOND PROVISIONAL CANDIDATE OF GROUND ID

FIG.26

| PIPELINE ID | BURIAL PERIOD $T_m$ (years) | NOMINAL PIPE WALL THICKNESS (mm) | FIRST BURIAL ENVIRONMENT | PIPELINE LENGTH (km) |
|---|---|---|---|---|
| · · · | 34.5 | · · · | B | · · · |
| · · · | 13.5 | · · · | C | · · · |

70

FIG.27

S31

S35

READ BURIED PIPE ATTRIBUTE DATA 52 AND WATER LEAKAGE ACCIDENT DATA 53 OF PIPELINE ID INCLUDED IN SECOND PROVISIONAL CANDIDATES OF GROUND ID

S36

CALCULATE BURIAL PERIOD $T_m$ OF EACH BURIED PIPE AT THE MIDDLE OF WATER LEAKAGE ACCIDENT DATA COLLECTION PERIOD 55

S37

SPECIFY NOMINAL PIPE THICKNESS OF EACH BURIED PIPE

S38

SPECIFY FIRST BURIAL ENVIRONMENT OF EACH BURIED PIPE

S39

CREATE FIRST PREPROCESSED BURIED PIPE DATA 70

FIG.28

```
        ┌─────────┐
        │  START  │
        └─────────┘
             │                    S21
             ▼         ┌─S40
   ┌──────────────────────────────┐
   │  CREATE INITIAL POPULATION   │
   └──────────────────────────────┘
             │
             │         ┌─S41
             ▼
   ┌──────────────────────────────┐
   │  CALCULATE FITNESS OF EACH    │
   │  INDIVIDUAL                   │
   └──────────────────────────────┘
             │         ┌─S42
             ▼                          YES
   ╱──────────────────────────╲
   ⟨   IS TERMINATION          ⟩──────────────┐
   ╲  CONDITION SATISFIED?     ╱               │
         │  NO                                 │
         ▼         ┌─S43                       ▼         ┌─S47
   ┌────────────────────────┐      ┌──────────────────────────────┐
   │  CREATE NEW GENERATION  │      │  SELECT INDIVIDUAL HAVING     │
   │  POPULATION             │      │  THE HIGHEST FITNESS          │
   └────────────────────────┘      └──────────────────────────────┘
                                                │
                                                ▼
                                          ┌─────────┐
                                          │   END   │
                                          └─────────┘
```

FIG.29

| GROUND ID SELECTED IN S20 | 001 | 025 | 137 | 256 | · · · |
|---|---|---|---|---|---|
| BURIAL ENVIRONMENT CLASSIFICATION MAP CANDIDATE 1 | 0 | 0 | 1 | 2 | · · · |
| BURIAL ENVIRONMENT CLASSIFICATION MAP CANDIDATE 2 | −1 | 0 | 0 | 1 | · · · |

FIG.30

```
                                      S43
                        ┌─S44
   ┌──────────────────────────────┐
   │    SELECTION (ELIMINATION)     │
   └──────────────────────────────┘
             │         ┌─S45
             ▼
   ┌──────────────────────────────┐
   │         CROSSOVER              │
   └──────────────────────────────┘
             │         ┌─S46
             ▼
   ┌──────────────────────────────┐
   │         MUTATION               │
   └──────────────────────────────┘
```

FIG.31

S41

```
                                                    ┌─ S50
┌──────────────────────────────────────────────┐
│ CREATE MODIFIED INTEGRATED MAP                │
│ CORRESPONDING TO EACH INDIVIDUAL              │
└──────────────────────────────────────────────┘
                    │
                    ▼                   ┌─ S51
┌──────────────────────────────────────────────┐
│ CREATE SECOND PREPROCESSED BURIED             │
│ PIPE DATA 74                                  │
└──────────────────────────────────────────────┘
                    │
                    ▼                   ┌─ S52
┌──────────────────────────────────────────────┐
│ CALCULATE ESTIMATED PROBABILITY OF WATER      │
│ LEAKAGE ACCIDENTS FOR EACH PIPELINE ID        │
│ INCLUDED IN MODIFIED INTEGRATED MAP           │
└──────────────────────────────────────────────┘
                    │
                    ▼                   ┌─ S53
┌──────────────────────────────────────────────┐
│ CREATE ESTIMATED PROBABILITY-OF-WATER-        │
│ LEAKAGE-ACCIDENTS RESULT FOR EACH INDIVIDUAL  │
└──────────────────────────────────────────────┘
                    │
                    ▼                   ┌─ S54
┌──────────────────────────────────────────────┐
│ CALCULATE REMAINING NUMBER OF WATER           │
│ LEAKAGE ACCIDENTS AND PIPELINE RENEWAL RATE   │
└──────────────────────────────────────────────┘
                    │
                    ▼                   ┌─ S55
┌──────────────────────────────────────────────┐
│ CALCULATE FITNESS FOR EACH INDIVIDUAL         │
└──────────────────────────────────────────────┘
```

FIG.32

74

| PIPELINE ID | BURIAL PERIOD $T_m$ (years) | NOMINAL PIPE WALL THICKNESS (mm) | MODIFIED BURIAL ENVIRONMENT |
|---|---|---|---|
| · · · | 34.5 | · · · | B |
| · · · | 13.5 | · · · | C |

FIG.33

S51

S60

READ BURIED PIPE ATTRIBUTE DATA 52 AND WATER LEAKAGE ACCIDENT DATA 53

S61

CALCULATE BURIAL PERIOD $T_m$ OF EACH BURIED PIPE AT THE MIDDLE OF WATER LEAKAGE ACCIDENT DATA COLLECTION PERIOD 55

S62

SPECIFY NOMINAL PIPE THICKNESS OF EACH BURIED PIPE

S63

SPECIFY MODIFIED BURIAL ENVIRONMENT OF EACH BURIED PIPE

S64

CREATE SECOND PREPROCESSED BURIED PIPE DATA 74

FIG.34

76

| PIPELINE ID | ESTIMATED PROBABILITY OF WATER LEAKAGE ACCIDENTS $R_m$ (case/year/km) | PIPELINE LENGTH (km) |
|---|---|---|
| . . . | . . . | . . . |
| . . . | . . . | . . . |

FIG.35

FITNESS＝1/S

REMAINING NUMBER
OF WATER LEAKAGE
ACCIDENTS (CASES)

AREA S

PIPE RENEWAL RATE (%)

FIG.36

START

S70
CALCULATES DETERIORATION DEGREE FOR EACH PIPELINE
ID BASED ON OPTIMIZED INTEGRATED MAP 58 AND BURIED
PIPE DETERIORATION DEGREE PREDICTION MODEL 42

S80
CREATE BURIED PIPE DETERIORATION DEGREE PREDICTION
RESULT 65

S81
OUTPUT BURIED PIPE DETERIORATION DEGREE PREDICTION
RESULT 65

END

## FIG.37

S70

S71

| CREATE THIRD PREPROCESSED BURIED PIPE DATA 78 |
|---|

S77

| CALCULATE DETERIORATION DEGREE FOR EACH PIPELINE ID |
|---|

## FIG.38

78

| PIPELINE ID | BURIAL PERIOD $T_3$ (years) | BURIAL PERIOD $T_4$ (years) | NOMINAL PIPE WALL THICKNESS (mm) | SECOND BURIAL ENVIRONMENT |
|---|---|---|---|---|
| . . . | 37 | 42 | . . . | B |
| . . . | 16 | 21 | . . . | C |

## FIG.39

S71

S72

| READ BURIED PIPE ATTRIBUTE DATA 32 |
|---|

S73

| CALCULATE BURIAL PERIOD OF EACH BURIED PIPE |
|---|

S74

| SPECIFY NOMINAL PIPE THICKNESS OF EACH BURIED PIPE |
|---|

S75

| SPECIFY SECOND BURIAL ENVIRONMENT OF EACH BURIED PIPE |
|---|

S76

| CREATE THIRD PREPROCESSED BURIED PIPE DATA 78 |
|---|

FIG.40

FIG.41

## INTERNATIONAL SEARCH REPORT

| International application No. |
| --- |
| **PCT/JP2023/043624** |

| A. | CLASSIFICATION OF SUBJECT MATTER |
| --- | --- |

*G06Q 50/06*(2024.01)i; *E03F 3/02*(2006.01)i; *G06Q 10/20*(2023.01)i
FI:  G06Q50/06; E03F3/02; G06Q10/20

According to International Patent Classification (IPC) or to both national classification and IPC

| B. | FIELDS SEARCHED |
| --- | --- |

Minimum documentation searched (classification system followed by classification symbols)

G06Q50/06; E03F3/02; G06Q10/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | JP 2022-118672 A (HITACHI, LTD.) 15 August 2022 (2022-08-15) <br> paragraphs [0015]-[0110] | 1-2, 10-11, 19-20 |
| P, X | JP 7343025 B1 (NEC CORPORATION) 12 September 2023 (2023-09-12) <br> paragraphs [0001]-[0046] | 5-6, 9, 14-15, 18 |
| A | WO 2013/145493 A1 (NEC CORPORATION) 03 October 2013 (2013-10-03) <br> entire text, all drawings | 1-20 |
| A | WO 2018/070396 A1 (FUJI SUBSURFACE INFORMATION LTD) 19 April 2018 (2018-04-19) <br> entire text, all drawings | 1-20 |
| A | JP 2005-149280 A (ASIA AIR SURVEY CO., LTD.) 09 June 2005 (2005-06-09) <br> entire text, all drawings | 1-20 |
| A | JP 2006-183274 A (YAMAGUCHI UNIV.) 13 July 2006 (2006-07-13) <br> entire text, all drawings | 1-20 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 January 2024** | **30 January 2024** |

| Name and mailing address of the ISA/JP | Authorized officer |
| --- | --- |
| **Japan Patent Office (ISA/JP)** <br> 3-4-3 Kasumigaseki, Chiyoda-ku, Tokyo 100-8915 <br> Japan | |
| | Telephone No. |

Form PCT/ISA/210 (second sheet) (July 2022)

**INTERNATIONAL SEARCH REPORT**

International application No.

**PCT/JP2023/043624**

| Box No. III | Observations where unity of invention is lacking (Continuation of item 3 of first sheet) |
|---|---|

This International Searching Authority found multiple inventions in this international application, as follows:

Document 1: JP 2022-118672 A (HITACHI, LTD.) 15 August 2022 (2022-08-15) paragraphs [0015]-[0110] (Family: none)

Claims are classified into two inventions below.

(Invention 1) Claims 1-4, 10-13, 19-20
    Document 1 indicates that "a prediction model of a water leakage accident is built by machine learning of a neural network from pipeline data of buried pipes, ground data, and history data of water leakage accidents," and claims 1-2 lack novelty in light of document 1, and thus do not have a special technical feature. However, claim 3 dependent on claim 1 has the special technical feature in which "the partial ground includes a first ground to which burying environment classification indicating relatively high corrosiveness in the general burying environment classification map is applied and in which a water leakage accident has not occurred on the basis of the water leakage accident data," and claims 4, 10-13, and 19-20 also have the technical feature identical to claim 3. Therefore, claims 4, 10-13, and 19-20 are classified as invention 1.

(Invention 2) Claim 5-9, 14-18
    It cannot be said that claims 5-9 and 14-18 have the technical feature identical or corresponding to claim 3 classified as invention 1.
    Claims 5-9 and 14-18 are not substantially identical to or similarly closely related to any of the claims classified as invention 1.
    Therefore, claims 5-9 and 14-18 cannot be classified as invention 1.
    Claims 5-9 and 14-18 have the special technical feature of a "pipeline deterioration prediction device comprising a buried pipe deterioration calculation unit that calculates deterioration of each pipeline from burying environment of each buried pipe specified by a burying environment classification map optimized for a region corresponding to a pipeline map which is a map of the buried pipe, first information regarding buried period of each buried pipe, second information regarding a pipe thickness of each buried pipe, and a buried pipe deterioration prediction model, wherein the optimized burying environment classification map is created by optimizing burying environment classification of a partial ground in a general burying environment classification map of the region by machine learning, the general burying environment classification map is created from the pipeline map and a generally available ground map, the partial ground is selected from the general burying environment classification map on the basis of water leakage accident data which is the past actual result of a water leakage accident in each buried pipe," and are thus classified as invention 2.

Form PCT/ISA/210 (continuation of first sheet) (July 2022)

| INTERNATIONAL SEARCH REPORT | International application No. |
|---|---|
| | **PCT/JP2023/043624** |

**Box No. III**     **Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2023/043624**

| Patent document cited in search report | | | Publication date (day/month/year) | Patent family member(s) | | | Publication date (day/month/year) |
|---|---|---|---|---|---|---|---|
| JP | 2022-118672 | A | 15 August 2022 | (Family: none) | | | |
| JP | 7343025 | B1 | 12 September 2023 | (Family: none) | | | |
| WO | 2013/145493 | A1 | 03 October 2013 | US | 2015/0046099 | A1 | |
| | | | | EP | 2838067 | A1 | |
| WO | 2018/070396 | A1 | 19 April 2018 | EP | 3528198 | A1 | |
| | | | | CN | 108235773 | A | |
| | | | | KR | 10-2018-0068949 | A | |
| JP | 2005-149280 | A | 09 June 2005 | (Family: none) | | | |
| JP | 2006-183274 | A | 13 July 2006 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007107882 A

- JP 2021056224 A